# EUROPÄISCHE PATENTSCHRIFT

(11) **EP 3 561 701 B1**
(45) Veröffentlichungstag und Bekanntmachung des Hinweises auf die Patenterteilung: **20.07.2022**
(21) Anmeldenummer: 18168764.1
(22) Anmeldetag: 23.04.2018
(51) Int. Cl.: G06F 30/17, G06F 30/20, G06F 111/06

(54) **VERFAHREN UND VORRICHTUNG ZUM BESTIMMEN EINER KÖRPERLICHEN FORM, VERFAHREN ZUR HERSTELLUNG EINER BERECHNUNGSEINRICHTUNG, BERECHNUNGSEINRICHTUNG UND VERWENDUNG DER BERECHNUNGSEINRICHTUNG**
METHOD AND DEVICE FOR DETERMINING A PHYSICAL FORM, METHOD FOR PRODUCING A CALCULATION DEVICE, CALCULATION DEVICE AND USE OF THE CALCULATION DEVICE
PROCÉDÉ ET APPAREIL DE DÉTERMINATION D'UNE FORME PHYSIQUE, PROCÉDÉ DE FABRICATION D'UN DISPOSITIF DE CALCUL, DISPOSITIF DE CALCUL ET UTILISATION DUDIT DISPOSITIF DE CALCUL

(43) Veröffentlichungstag der Anmeldung: 30.10.2019
(73) Patentinhaber: Siemens Aktiengesellschaft, 80333 München (DE)
(72) Erfinder: GAVRANOVIC, Stefan, 85640 Putzbrunn (DE); HARTMANN, Dirk, 85617 Aßling (DE)

(56) Entgegenhaltungen:
- PIERRE BAQUÉ ET AL: "Geodesic Convolutional Shape Optimization", ARXIV.ORG, CORNELL UNIVERSITY LIBRARY, US , 12. Februar 2018 (2018-02-12), Seiten 1-11, XP080856391, Gefunden im Internet: URL:https://arxiv.org/pdf/1802.04016.pdf [gefunden am 2018-09-10]
- Anton Lundberg: "Efficient Automatic Vehicle Shape Determination using Neural Networks and Evolutionary Optimization", , 2014, Seiten 1-53, XP055505922, Gothenburg, Sweden Gefunden im Internet: URL:http://publications.lib.chalmers.se/re cords/fulltext/204825/204825.pdf [gefunden am 2018-09-10]
- SONG K S ET AL: "Aerodynamic design optimization of rear body shapes of a sedan for drag reduction", INTERNATIONAL JOURNAL OF AUTOMOTIVE TECHNOLOGY, THE KOREAN SOCIETY OF AUTOMOTIVE ENGINEERS, HEIDELBERG, vol. 13, no. 6, 2 October 2012 (2012-10-02), pages 905-914, XP035120064, ISSN: 1976-3832, DOI: 10.1007/S12239-012-0091-7

## Beschreibung

Die vorliegende Erfindung betrifft ein Verfahren zum Bestimmen einer körperlichen Form mit einer vorgegebenen physikalischen Zieleigenschaft, ein Verfahren zur Herstellung einer Berechnungseinrichtung zur Berechnung einer Sensitivitätslandschaft, eine Berechnungseinrichtung, eine Verwendung der Berechnungseinrichtung und eine Vorrichtung zur Bestimmung einer körperlichen Form mit einer vorgegebenen physikalischen Zieleigenschaft.

Bei der Herstellung von körperlichen Gegenständen ist manchmal die Optimierung ihrer Form in Bezug auf eine physikalische Eigenschaft erforderlich. Zum Beispiel ist bei der Herstellung von Kraftfahrzeugen eine Optimierung ihrer äußeren Form in Bezug auf den Strömungswiderstand erforderlich, so dass eine äußere Kraftfahrzeugform bestimmt werden kann, welche eine optimale Strömungseigenschaft aufweist.

Othmer 2014 ("Adjoint methods for car aerodynamics", Journal of Mathematics in Industry, Springer, 2014, 4:6) beschreibt eine gradienten-basierte Optimierung bei numerischer Strömumgsmechanik (Computational Fluid Dynamics, CFD) und eine darauf basierende Berechnung sogenannter Sensitivitätskarten.

Baque P. et al. ("Geodesic Convolutional Shape Optimization", arXiv: 1802.04016v1 arXiv.org, 12. Februar 2018) beschreibt eine aerodynamische Formoptimierung, bei der ein geodätisches gefaltetes Neuronales Netz angelernt wird, so dass es eine Strömungssimulation emuliert.

Lundberg 2014 ("Efficient Automatic Vehicle Shape Determination using Neural Networks and Evolutionary Optimization", Master thesis, Chalmers University of Technology) beschreibt eine Formoptimierung von Fahrzeugformen, bei der ein Neuronales Netz angelernt wird, so dass es als eine Näherung an eine Strömungssimulation fungiert.

K. S. Song et al. ("Aerodynamic Design Optimization of Rear Body Shapes of a Sedan for Drag Reduction", International Journal of Automotive Technology, Vol. 13, No. 6, pp. 905-914, 2012) offenbart eine aerodynamische Formoptimierung von Fahrzeugformen mittels eines künstlichen neuronalen Netzes sowie einer Strömungssimulation.

Die Berechnung gradienten-basierter Sensitivitätskarten ist allerdings rechenaufwendig. Ihre Anwendung bei der Bestimmung von körperlichen Formen, insbesondere bei Herstellungsprozessen, bedeutet einen hohen Aufwand an Zeit und Kosten. Dies kann zu hohen Herstellungskosten und langen Designphasen führen und eine interaktive Designgestaltung erschweren.

Vor diesem Hintergrund besteht eine Aufgabe der vorliegenden Erfindung darin, verbesserte Verfahren und Vorrichtungen zum Bestimmen einer körperlichen Form mit einer vorgegebenen physikalischen Zieleigenschaft bereitzustellen. Eine weitere Aufgabe der vorliegenden Erfindung besteht darin, ein Verfahren zur Herstellung einer Berechnungseinrichtung zur Berechnung einer Sensitivitätslandschaft bereitzustellen. Eine weitere Aufgabe der vorliegenden Erfindung besteht darin, eine Vorrichtung zur Bestimmung einer körperlichen Form mit einer vorgegebenen physikalischen Zieleigenschaft bereitzustellen, mit welcher gradienten-basierte Sensitivitätslandschaften berechnet werden können.

Demgemäß wird ein Verfahren zum Bestimmen einer körperlichen Form mit einer vorgegebenen physikalischen Zieleigenschaft bereitgestellt. Das Verfahren umfasst:
Bereitstellen eines körperlichen Modells und Erfassen von Formdaten für das körperliche Modell und/oder Bereitstellen von Formdaten eines körperlichen Modells jeweils zum Erstellen eines Formdatendatensatzes, welcher Orte an oder auf einer körperlichen Form, welche den Formdaten entspricht, identifiziert.
Das Verfahren umfasst weiter: Erfassen der Zieleigenschaft für die körperliche Form, welche dem Formdatensatz entspricht.
Das Verfahren umfasst weiter: Bestimmen von Sensitivitätswerten für mehrere Orte an oder auf der körperlichen Form in Abhängigkeit von dem Formdatensatz zum Erzeugen einer Sensitivitätslandschaft für den jeweiligen Formdatensatz. Ein Sensitivitätswert gibt einen Ort an oder auf der körperlichen Form ein Änderungsmaß an für die Veränderung der Zieleigenschaft der körperlichen Form bei einer Änderung der körperlichen Form im Bereich des Ortes durch eine Änderung des Formdatensatzes.
Das Verfahren umfasst weiter: Anwenden eines Verfahrens zum maschinellen Lernen zum Erzeugen einer Berechnungseinrichtung, welche einem jeweiligen Formdatensatz eine Sensitivitätslandschaft zuordnet. Das maschinelle Lernen erfolgt in Abhängigkeit von mehreren Formdatensätzen und mindestens den dazu erfassten Sensitivitätswerten.
Das Verfahren umfasst weiter: Berechnen einer Sensitivitätslandschaft in Abhängigkeit von einem Formdatensatz für eine zu bestimmende körperliche Form mit Hilfe der Berechnungseinrichtung.
Das Verfahren umfasst weiter: Ändern des Formdatensatzes für die zu bestimmende körperliche Form in Abhängigkeit von der berechneten Sensitivitätslandschaft derart, dass sich die vorgegebene physikalische Zieleigenschaft in Richtung zu einem vorbestimmten Wert ändert.
Darüber führt die Berechnungseinrichtung eine Mustererkennung an Formdatensätzen durch und gibt eine Sensitivitätslandschaft aus.

Durch Anwenden des Verfahrens zum maschinellen Lernen zum Erzeugen einer maschinell angelernten Berechnungseinrichtung und durch Berechnen einer Sensitivitätslandschaft für eine zu bestimmende körperliche Form mit Hilfe dieser Berechnungseinrichtung ist die Bestimmung einer körperlichen Form mit einer vorgegebenen physikalischen Zieleigenschaft ohne rechenaufwendiges Simulationsverfahren möglich.

Damit ist die Bestimmung einer körperlichen Form mit einer vorgegebenen physikalischen Zieleigenschaft mit weniger Rechenaufwand und somit schneller und kostengünstiger möglich. Dadurch ist ein schnelles (z. B. auch interaktives) Reagieren des Anwenders des Verfahrens auf die Ergebnisse der Berechnungseinrichtung möglich.

Die vorgegebene physikalische Zieleigenschaft ist insbesondere eine physikalische Eigenschaft bzw. physikalische Größe bzw. physikalische Funktion der körperlichen Form, deren Wert durch das Verfahren in Richtung zu einem vorbestimmten Wert, z.B. einem Minimalwert oder einem Maximalwert, verändert, insbesondere verbessert bzw. optimiert, wird. Als physikalische Eigenschaft kommt insbesondere ein Strömungswiderstand, eine Festigkeit, eine Temperatur, eine Reflexionseigenschaft an der Oberfläche, ein Gewicht, eine Leitfähigkeit, ein Wärmeübergangskoeffizient, eine Kühlungseigenschaft und/oder eine Schallabsorption einer Oberflächenstruktur in Frage.

Das körperliche Modell kann ein gegenständliches körperliches Modell sein, zum Beispiel ein sog. Lehmmodell bzw. Tonmodell (engl. clay model). In diesem Fall werden Formdaten des gegenständlichen körperlichen Modells erfasst, wie später beschrieben wird. Alternativ oder zusätzlich kann als körperliches Modell ein digitales körperliches Modell verwendet werden, welches in Form von Formdaten vorliegt und/oder bereitgestellt ist. Ein digitales körperliches Modell ist beispielsweise ein rechnerunterstützt-konstruiertes Modell (Computer-Aided-Design-Modell, CAD-Modell). Weitere Beispiele für als Formdaten bereitgestellte digitale körperliche Modelle werden später beschrieben.

Die körperliche Form ist eine geometrische Form des körperlichen Modells. Die körperliche Form ist zum Beispiel eine zwei- oder dreidimensionale geometrische Form des körperlichen Modells. Beispielsweise kann die körperliche Form eine äußere Fahrzeugform sein.

Die Formdaten sind Daten, welche die körperliche Form in abstrakter Weise beschreiben. Die Formdaten sind insbesondere Daten, welche die körperliche Form in digitaler bzw. mathematischer Weise beschreiben. Die Formdaten sind digitale Werte und/oder digital formulierbare Angaben, welche die körperliche Form identifizieren.

Der Formdatendatensatz identifiziert Orte an oder auf der körperlichen Form, welche durch die Formdaten, wie beschrieben, identifiziert wird. Beispielsweise ist der Formdatensatz ein Satz von Ortskoordinaten.

Ein Sensitivitätswert für einen (bestimmten) Ort an oder auf der körperlichen Form ist ein Änderungsmaß bzw. ein Gradient, welcher für diesen Ort angibt, wie sich die Zieleigenschaft der körperlichen Form verändert, wenn die körperliche Form im Bereich dieses Ortes in einer Normalrichtung geändert wird. Der Sensitivitätswert für diesen Ort an oder auf der körperlichen Form gibt somit an, wie sensibel die physikalische Zieleigenschaft auf eine Formänderung der körperlichen Form an diesem Ort reagieren würde. Beispielsweise ist ein Sensitivitätswert für einen Ort an oder auf der körperlichen Form ein Betrag, insbesondere ein Betrag und ein Vorzeichen, entlang eines Normalenvektors an diesem Ort.

Die Sensitivitätslandschaft umfasst einen Formdatensatz, welcher mehrere Orte an oder auf der körperlichen Form identifiziert, und zu diesen Orten zugehörige Sensitivitätswerte, welche angeben, wie die körperliche Form an diesen Orten in einer Normalrichtung geändert werden müsste, um die Zieleigenschaft zu optimieren.

Das Ändern des Formdatensatzes für die zu bestimmende körperliche Form in Abhängigkeit von der berechneten Sensitivitätslandschaft bedeutet ein Ändern der körperlichen Form, welche durch die Formdaten identifiziert wird.

Maschinelles Lernen bzw. künstliche Intelligenz (KI; artifizielle Intelligenz, AI) ist die Fähigkeit computergestützter Systeme, Methoden anzuwenden und Aufgaben zu lösen, die, wenn sie vom Menschen gelöst werden, Intelligenz erfordern.

Das Anwenden des Verfahrens zum maschinellen Lernen zum Erzeugen einer Berechnungseinrichtung bzw. einer artifiziellen Intelligenz kann mit Hilfe eines Maschinenlernalgorithmus erfolgen. Dabei wird mit Hilfe eines Algorithmus aus Beispieldaten, sog. Lerndatensätzen, welche in die Berechnungseinrichtung eingefüttert werden, ein künstliches System (die Berechnungseinrichtung) angelernt, so dass es nach dem Anlernen auch unbekannte Eingangsdaten beurteilen kann.

Die Lerndatensätze umfassen insbesondere Formdatensätze und dazugehörige Sensitivitätslandschaften. Das maschinelle Anlernen erfolgt zum Beispiel durch Erkennen von Ähnlichkeiten und Mustern in den mehreren Lerndatensätzen, Sortieren der Lerndatensätze nach den erkannten Ähnlichkeiten und Mustern in Kategorien und Generalisieren der Kategorien, um Voraussagen für unbekannte Eingangsdatensätze treffen zu können.

Beispielsweise umfasst ein erster Lerndatensatz einen ersten Formdatensatz für eine bestimmte erste Fahrzeugform und die dazugehörige Sensitivitätslandschaft. Beispielsweise umfasst ein zweiter Lerndatensatz einen zweiten Formdatensatz für eine bestimmte zweite Fahrzeugform, welche von der ersten Fahrzeugform verschieden ist, und die zur zweiten Fahrzeugform gehörigen Sensitivitätslandschaften. Bei dem maschinellen Anlernen mit Hilfe dieser beiden beispielhaften Lerndatensätze, können von der Berechnungseinrichtung Muster erkannt werden, die darauf schließen lassen, dass bestimmte Formen besonders kleine Sensitivitätswerte aufweisen und bestimmte Formen besonders große jeweils positive oder negative Sensitivitätswerte aufweisen. Damit kann die Berechnungseinrichtung einen künstlichen Formdatensatz und eine dazugehörige künstliche Sensitivitätslandschaft für eine dritte Fahrzeugform erzeugen, welche nicht in die Berechnungseinrichtung eingefüttert wurde und welche folglich den eingegebenen ersten Formdatensatz mit zugehöriger Sensitivitätslandschaft und den eingegebenen zweiten Formdatensatz mit zugehöriger Sensitivitätslandschaft erweitert. Somit kann die Berechnungseinrichtung nach diesem beispielhaften Anlernen auch für eine körperliche Form, welche dem dritten Formdatensatz entspricht, eine Sensitivitätslandschaft berechnen.

Ein Maschinenlernalgorithmus kann beispielsweise mit Hilfe von Entscheidungsbäumen, mathematischen Funktionen, allgemeinen Programmiersprachen, Neuronalen Netzen, insbesondere faltenden Neuronalen Netzen (Convolutional Neural Network, CNN), Nearest-Neighbor-Methode, Bayesischen Netzwerken und/oder linearer Regression realisiert werden. Der Maschinenlernalgorithmus kann beispielsweise zum überwachten Lernen und/oder zum unüberwachten Lernen ausgebildet sein. Der Maschinenlernalgorithmus kann beispielsweise zum tiefen Lernen ("deep learning") und/oder zum bestärkenden Lernen ("reinforcement learning") und/oder zum Marginal Space Learning ausgebildet sein.

In Ausführungsformen umfasst die körperliche Form ein Volumen, eine zweidimensionale geometrische Form, eine dreidimensionale geometrische Form, eine Fahrzeugform, eine Form eines Strukturelements, eine Form eines Befestigungselements und/oder eine dreidimensionale Form einer Oberflächenstruktur ist.

Beispielsweise kann die körperliche Form eine äußere Fahrzeugform, eine Halterung, Struktur und/oder Platte zur Befestigung einer Last, eine Kühlstruktur bzw. ein Kühlkörper oder eine Lärmdämmungswandverkleidung sein.

Mit dem Verfahren können entsprechende verschiedene körperliche Formen hinsichtlich einer jeweiligen vorgegebenen physikalischen Zieleigenschaft verändert werden.

Beispielsweise kann eine äußere Fahrzeugform so verändert werden, dass sie einen minimalen Strömungswiderstand hat. Beispielsweise kann eine Halterung, Struktur und/oder Platte so verändert werden, dass sie ein minimales Gewicht bzw. Volumen hat, um eine vorgegebene Last zu tragen. Beispielsweise kann eine dreidimensionale Form eines Befestigungselements so verändert werden, dass seine Strukturfestigkeit bei vorgegebener Beanspruchung und Materialaufwand maximiert wird. Beispielsweise kann eine Kühlstruktur, wie beispielsweise ein Kühlkörper, so verändert werden, dass seine Wärmeableitungsfähigkeit maximiert wird. Beispielsweise kann die dreidimensionale Oberflächenstruktur eine Lärmdämmungswandverkleidung so verändert werden, dass sie eine maximale Schallabsorption hat.

Beispielsweise kann für eine körperliche Form, welche eine zweidimensionale geometrischen Form ist hinsichtlich einer minimalen oder maximalen Reflexionseigenschaft einer Oberfläche verändert werden.

In Ausführungsformen weist das Erfassen der Formdaten für das körperliche Modell auf: ein Abtasten mit Hilfe einer Abtasteinrichtung, insbesondere mit Hilfe von Kameras, Laserstrahlen, Radarwellen, und/oder Ultraschallwellen.

Beispielsweise können die Formdaten für das körperliche Modell durch Aufnahmen des körperlichen Modells mit Stereo-Kameras, welche mehrere Objektive aufweisen, erfasst werden. Die Formdaten für das körperliche Modell können auch mit Hilfe eines Laser-Triangulationsverfahrens erfasst werden. Bei einem Laser-Triangulationsverfahren wird das körperliche Modell mit einer Laserstrahlung bestrahlt und das von dem körperlichen Modell reflektierte Laserlicht mit einer Empfangseinheit erfasst. Aus dem Winkel, unter dem das reflektierte Licht auf der Empfangseinheit auftritt, kann die Entfernung zu dem körperlichen Modell berechnet werden. Durch Abtasten des gesamten körperlichen Modells durch dieses Verfahren können dreidimensionale Formdaten des körperlichen Modells erfasst werden.

In einer anderen Ausführungsform können die Formdaten für das körperliche Model durch Laufzeitmessung mit beispielsweise Ultraschall erfasst werden. Bei der Laufzeitmessung wird eine (Ultraschall-)Strahlung von einer Strahlungsquelle ausgesendet, diese von dem körperlichen Modell reflektiert, die reflektierte Strahlung von einer Empfangseinheit erfasst und die Zeit gemessen, die die Strahlung benötigt, um die Strecke von der Strahlungsquelle zum körperlichen Modell und zur Empfangseinheit zurückzulegen.

In Ausführungsformen weisen die Formdaten auf: rechnerunterstützt-konstruierte Daten (Computer-Aided-Design-Daten, CAD-Daten), Oberflächenformdaten, Regelformdaten, Regelflächendaten, Gitterdaten, Gitterstrukturdaten, Daten parametrisierter Freiformflächen und/oder Facettendaten.

Eine Verwendung parametrisierter Freiformflächen erlaubt den Verzicht auf physikalische tastbare Modelle, weil die Zieleigenschaft anstelle durch eine physikalische Messung durch Simulation der parametrisierter Freiformflächen erfolgen kann.

In Ausführungsformen weist das Erfassen der Zieleigenschaft auf: ein Messen der Zieleigenschaft, insbesondere ein Messen eines Strömungswiderstands in einem Windkanal, ein Messen einer Strukturfestigkeit, einer Temperatur, einer Reflexionseigenschaft an der Oberfläche, eines Gewichts, einer Leitfähigkeit und/oder einer Schallabsorption einer Oberflächenstruktur.

Insbesondere für ein körperliches Modell, welches als gegenständliches körperliches Modell bereitgestellt wird, kann das Erfassen der Zieleigenschaft ein Messen der Zieleigenschaft, zum Beispiel in einem Laborexperiment, aufweisen. Zum Beispiel kann für ein gegenständliches körperliches Modell einer Fahrzeugform der Strömungswiderstand der äußeren Fahrzeugform in einem Windkanal gemessen werden. Zum Beispiel kann für ein gegenständliches körperliches Modell einer Halterung, Struktur und/oder Platte zur Befestigung einer Last dessen Strukturfestigkeit bezüglich des Tragens der Last in einem Laborexperiment gemessen werden. Zum Beispiel kann für ein gegenständliches körperliches Modell einer Lärmdämmungswandverkleidung dessen Schallabsorption in einem Akustiklabor gemessen werden.

In Ausführungsformen weist das Erfassen der Zieleigenschaft ein Simulationsverfahren zur Simulation der Zieleigenschaft in Abhängigkeit von dem Formdatensatz auf.

Ein Erfassen der Zieleigenschaft durch ein Simulationsverfahren erlaubt den Verzicht auf physikalische tastbare Modelle und somit auf das Fertigen von physikalische tastbare Modelle.

Zum Beispiel kann für einen Formdatensatz, welcher einem körperlichen Modell eines Fahrzeugs entspricht, der Strömungswiderstand der äußeren Fahrzeugform in einer numerischen Strömungssimulation erfasst werden. Durch Erfassen der Zieleigenschaft in einer Simulation kann die Zieleigenschaft effizienter, kostengünstiger und in kürzerer Zeit erfasst werden als in einem Laborexperiment.

In Ausführungsformen erfolgt das Erfassen der Zieleigenschaft unter Berücksichtigung von erfassten Randbedingungen, wobei die Randbedingungen Wertebereiche festlegen, für welche das Messen und/oder das Simulieren der Zieleigenschaft erfolgt, und wobei die Randbedingungen insbesondere eine Windrichtung, eine Windstärke, eine Windkanalkonfiguration, ein Gewicht, eine Kraft, eine Strukturfestigkeit, eine Schallfrequenz und/oder eine Schallleistung aufweisen.

Durch das Berücksichtigen von Randbedingungen bei dem Erfassen der Zieleigenschaft können gewünschte Wertebereiche festgelegt werden, welche den Einsatzbereich der zu bestimmenden körperlichen Form kennzeichnen.

Zum Beispiel kann das Erfassen des Strömungswiderstands einer äußeren Fahrzeugform unter Berücksichtigung der Randbedingung einer bestimmten Windrichtung (insbesondere eines Wertebereichs von Windrichtungen) und der Randbedingung einer bestimmten Windstärke (insbesondere eines Wertebereichs einer Windstärke) erfolgen.

Sowohl das Erfassen der Zieleigenschaft durch ein Messen der Zieleigenschaft als auch das Erfassen der Zieleigenschaft durch ein Simulationsverfahren zur Simulation der Zieleigenschaft können unter Berücksichtigung von Randbedingungen erfolgen.

Das Erfassen der Randbedingungen kann bei einem Messen der Zieleigenschaft beispielweise ein Einstellen der Randbedingungen an Laborgeräten sein.

Das Erfassen der Randbedingungen kann bei einem Simulationsverfahren zur Simulation der Zieleigenschaft beispielweise ein Eingeben der Randbedingungen in eine Simulationseinheit als Parameter des Simulationsverfahrens sein.

In Ausführungsformen weist das Simulationsverfahren auf: ein mathematisches Simulationsverfahren, ein numerisches Simulationsverfahren, ein Raumdiskretisierungsverfahren, ein Oberflächendiskretisierungsverfahren, ein Finite-Elemente-Verfahren, ein Finite-Differenzen-Verfahren, ein Finite-Volumen-Verfahren, ein Partikel-basiertes Verfahren, ein numerisches Kontinuumsmechanik-Verfahren und/oder ein numerisches Strömungsmechanik-Verfahren (Computational-Fluid-Dynamics-Verfahren).

In Ausführungsformen wird jedem Formdatensatz mindestens die dazu erfassten Sensitivitätswerte zum Erzeugen von einem jeweiligen Lerndatensatz zugeordnet.

Ein derartiges Erzeugen von Lerndatensätzen erlaubt es, diese Lerndatensätze in die Berechnungseinrichtung einzufüttern und zum maschinellen Anlernen der Berechnungseinrichtung zu verwenden.

In Ausführungsformen umfasst das Verfahren ferner Erzeugen und Speichern mehrerer Lerndatensätze.

Durch die Erzeugung von mehreren Lerndatensätzen kann die Berechnungseinrichtung besser angelernt werden. Durch ein Speichern der mehreren Lerndatensätze können diese auch noch zu einem späteren Zeitpunkt von der Berechnungseinrichtung ausgewertet werden.

In Ausführungsformen gibt ein Sensitivitätswert für einen einen vorbestimmten Ort definierenden Ortsdatensatz ein Änderungsmaß für die Veränderung der Zieleigenschaft bei einer Änderung der körperlichen Form in einer Normalrichtung an dem vorbestimmten Ort an.

Durch den Sensitivitätswert, welcher für einen vorbestimmten Ort ein Änderungsmaß für die Veränderung der Zieleigenschaft bei einer Änderung der körperlichen Form in einer Normalrichtung an dem vorbestimmten Ort angibt, ist es möglich, dem Anwender des Verfahrens die Information, wie die körperliche Form an dem vorbestimmten Ort vorteilhaft verändert werden kann, als, z. B. farbcodierten, Wert anzugeben. Eine vorteilhafte Veränderung der körperlichen Form ist dabei eine Veränderung der körperlichen Form, so dass sich die vorgegebene physikalische Zieleigenschaft in Richtung zu einem vorbestimmten Wert ändert.

In Ausführungsformen umfasst die jeweilige Sensitivitätslandschaft einen Formdatensatz und ein Änderungsmaß für die Veränderung der Zieleigenschaft der körperlichen Form bei einer Änderung der körperlichen Form in einer jeweiligen Normalrichtung an mehreren der durch den Formdatensatz identifizierten Orte an oder auf der körperlichen Form durch eine Änderung des Formdatensatzes.

In Ausführungsformen weist das Anwenden eines Verfahrens zum maschinellen Lernen ein Anlernen/Trainieren eines Neuronales Netzes, insbesondere eines faltenden Neuronalen Netzes, mit Hilfe mehrerer erzeugter Lerndatensätze auf.

Durch Anwenden eines Verfahrens zum maschinellen Lernen mit Hilfe eines artifiziellen neuronalen Netzes, insbesondere eines faltenden neuronalen Netzes (Convolutional Neural Network, CNN), können komplexe, nicht-lineare Zusammenhänge zwischen Lerndatensätzen gelernt werden.

In Ausführungsformen werden die folgenden Schritte nacheinander mehrfach ausgeführt: Ändern des Formdatensatzes für die zu bestimmende körperliche Form, und Berechnen einer Sensitivitätslandschaft in Abhängigkeit von dem Formdatensatz mit Hilfe der Berechnungseinrichtung zum Ändern der körperlichen Form.

Durch ein wiederholtes Ausführen der genannten Schritte kann der Formdatensatz für die zu bestimmende körperliche Form derart schrittweise geändert werden, dass sich die vorgegebene physikalische Zieleigenschaft immer stärker in Richtung zu einem vorbestimmten Wert ändert.

In Ausführungsformen umfasst die Berechnungseinrichtung eine Zuordnungstabelle, welche mehreren Formdatensätzen eine jeweilige Sensitivitätslandschaft zuordnet.

In Ausführungsformen umfasst das Verfahren ferner Anzeigen der Sensitivitätslandschaft in Abhängigkeit von dem Formdatensatz.

Durch ein Anzeigen der Sensitivitätslandschaft in Abhängigkeit von dem Formdatensatz erhält der Anwender des Verfahrens für mehrere durch den Formdatensatz identifizierte Orte auf oder an der körperlichen Form eine (direkte) Information darüber, wie der Formdatensatz im Bereich dieser Orte in einer jeweiligen Normalrichtung geändert werden kann, um die vorgegebene physikalische Zieleigenschaft der körperlichen Form in Richtung zu einem vorbestimmten Wert zu ändern.

Dadurch erhält der Anwender des Verfahrens für die mehreren Orte an oder auf der körperlichen Form, eine direkt mit den jeweiligen Orten in Zusammenhang stehende Information darüber, ob und, wenn ja, in welcher Richtung und in welchem Ausmaß die körperliche Form an dem vorbestimmten Ort vorteilhaft verändert werden kann. Beispielsweise ist es möglich, dem Anwender des Verfahrens die Information, wie die körperliche Form an dem vorbestimmten Ort vorteilhaft verändert werden kann, als farbcodierten Wert anzugeben. Beispielsweise kann der Anwender den Formdatensatz für die körperliche Form durch die erhaltene Information interaktiv verändern.

In Ausführungsformen weist das Anzeigen ein räumliches Anzeigen der Sensitivitätslandschaft in Abhängigkeit von dem Formdatensatz an dem körperlichen Modell und/oder ein Anzeigen der Sensitivitätslandschaft in Abhängigkeit von dem Formdatensatz derart auf, dass die Sensitivitätslandschaft zusammen mit dem Formdatensatz angezeigt wird.

Dadurch kann der Anwender im Falle eines gegenständlichen körperlichen Modells (z. B. eines Lehmmodels, clay model) als auch im Falle eines digitalen Modells (z. B. eines CAD-Models) die Information, wie die körperliche form vorteilhaft geändert werden kann, unmittelbar an dem körperlichen Modell erkennen.

In Ausführungsformen umfasst das Verfahren ein Fertigen einer körperlichen Form mit der vorgegebenen physikalischen Zieleigenschaft gemäß dem in Abhängigkeit von der berechneten Sensitivitätslandschaft geänderten Formdatensatz.

Durch das Fertigen der körperlichen Form gemäß dem geänderten Formdatensatz kann die Änderung des Formdatensatzes, und somit der körperlichen Form, auf einfache Weise gegenständlich und haptisch begreifbar gemacht werden, z. B. zur Fertigung eines Anschauungsobjektes und/oder Prototyps.

In Ausführungsformen umfasst das Fertigen einer körperlichen Form ein additives Herstellungsverfahren, insbesondere ein Herstellungsverfahren mit Hilfe eines Strangs rasch abbindender Masse.

Dadurch kann in Abhängigkeit von dem geänderten Formdatensatz ein gegenständliches Modell der körperlichen Form automatisch, schnell und auch durch eine ungeübte Person hergestellt werden.

Gemäß einem weiteren Aspekt wird ein Verfahren zur Herstellung einer Berechnungseinrichtung zur Berechnung einer Sensitivitätslandschaft aus einem Formdatensatz bereitgestellt. Das Verfahren umfasst: Bereitstellen einer Basis-Künstliche-Intelligenz(KI)-Einrichtung, welche eine Einrichtung mit künstlicher Intelligenz auf Basis maschinellen Lernens ist und welche einen Eingangsdatensatz auf einen Ausgangsdatensatz abbildet. Das Verfahren umfasst weiter: Bereitstellen eines Formdatensatzes und zugehöriger Sensitivitätswerte, wobei der Formdatensatz und die zugehörigen Sensitivitätswerte zusammen einen Lerndatensatz bilden. Der Formdatensatz identifiziert Orte an oder auf einer körperlichen Form. Die Sensitivitätswerte geben für mehrere Orte an oder auf der körperlichen Form ein Änderungsmaß für die Veränderung einer physikalischen Zieleigenschaft der körperlichen Form bei einer Änderung der körperlichen Form im Bereich des Ortes durch eine Änderung des Formdatensatzes an. Die die Sensitivitätslandschaft umfasst die den Orten des Formdatensatzes zugeordneten Sensitivitätswerte. Das Verfahren umfasst weiter: Bereitstellen weiterer unterschiedlicher Lerndatensätze. Das Verfahren umfasst weiter: maschinelles Anlernen der Basis-KI-Einrichtung mit Hilfe der Lerndatensätze zum Erzeugen einer angelernten KI-Einrichtung als Berechnungseinrichtung.

Die Basis-Künstliche-Intelligenz(KI)-Einrichtung ist eine Einrichtung mit künstlicher Intelligenz auf Basis maschinellen Lernens. Aus der bereitgestellten Basis-KI-Einrichtung wird durch das Herstellungsverfahren, insbesondere durch maschinelles Anlernen, eine angelernte KI-Einrichtung als Berechnungseinrichtung erzeugt. Das maschinelle Lernen erfolgt beispielsweise mit Hilfe von Entscheidungsbäumen und/oder Neuronalen Netzen, insbesondere faltenden Neuronalen Netzen.

Man kann sagen, dass die KI-Einrichtung eine Einrichtung ist, die durch Trainieren mit Trainingsdaten nach einem angelernten Algorithmus Eingabedaten, insbesondere Formdaten, bearbeitet, und Ausgabedaten, insbesondere Sensitivitätslandschaften, ausgibt.

Es ist denkbar, dass die angelernte KI-Einrichtung Konfigurationsdaten, beispielsweise Topologieangaben und Gewichtswerte für Knoten eines neuronalen Netztes, umfasst, die die Eigenschaften bezüglich der Ein- und Ausgabedaten der KI-Einrichtung charakterisieren. Die vorgeschlagenen Verfahren könnten insofern den Schritt umfassen: Speichern von Konfigurationsdaten der KI-Einrichtung.

In Ausführungsformen umfasst das Herstellungsverfahren und oder das Verfahren zum Bestimmen einer Form den Schritt: Einrichten oder Konfigurieren einer Basis-KI-Einrichtung mit gespeicherten Konfigurationsdaten zum Bereitstellen einer Berechnungseinrichtung.

Aspekte und Ausführungsformen der Berechnungseinrichtung bzw. des maschinellen Lernens, welche in Bezug auf das Verfahren zur Bestimmung einer körperlichen Form mit einer vorgegebenen physikalischen Zieleigenschaft beschrieben wurden, gelten auch für das Verfahren zur Herstellung einer Berechnungseinrichtung.

Der Eingangsdatensatz ist ein Formdatensatz, der auf eine Sensitivitätslandschaft als Ausgangsdatensatz abgebildet wird.

In Ausführungsformen ist die physikalische Zieleigenschaft ein Strömungswiderstand, eine Festigkeit, eine Temperatur, eine Reflexionseigenschaft an der Oberfläche, ein Gewicht, eine Leitfähigkeit, eine Kühlungseigenschaft und/oder eine Schallabsorption einer Oberflächenstruktur.

In Ausführungsformen umfasst der jeweilige Formdatensatz die mehreren Orte auf oder an der Oberfläche der körperlichen Form in der Art von Ortsdatensätzen.

In Ausführungsformen umfasst die Berechnungseinrichtung ein Neuronales Netz, insbesondere ein faltendes Neuronales Netz.

In Ausführungsformen ist die Berechnungseinrichtung eingerichtet, eine Mustererkennung an Formdatensätzen durchzuführen und Sensitivitätswerte und/oder eine Sensitivitätslandschaft auszugeben.

Eine Mustererkennung kann an mehreren Formdatensätzen, insbesondere an mehreren Lerndatensätzen, durchgeführt werden. Dabei können in den mehreren Lerndatensätzen beispielsweise Regelmäßigkeiten, Wiederholungen und/oder Ähnlichkeiten erkannt werden, um Voraussagen für unbekannte Eingangsdatensätze treffen zu können. Damit kann mit Hilfe der angelernten KI-Einrichtung als Berechnungseinrichtung auch für während des Anlernens nicht bereitgestellte Formdatensätze eine Sensitivitätslandschaft berechnet werden.

In Ausführungsformen wird eine Berechnungseinrichtung bereitgesellt.

Es wird ferner eine Verwendung der Berechnungseinrichtung zur Berechnung einer Sensitivitätslandschaft aus einem Formdatensatz vorgeschlagen, wobei die Sensitivitätslandschaft zum derartigen Anpassen einer zu bestimmenden körperlichen Form bereitgestellt ist, dass sich die vorgegebene physikalische Zieleigenschaft in Richtung zu einem vorbestimmten Wert ändert.

Aspekte und Ausführungsformen der Berechnungseinrichtung unter Einsatz maschinellen Lernens, welche in Bezug auf das Verfahren zur Bestimmung einer körperlichen Form mit einer vorgegebenen physikalischen Zieleigenschaft beschrieben wurden, gelten auch für die Berechnungseinheit und die Verwendung der Berechnungseinheit.

Gemäß einem weiteren Aspekt wird eine Vorrichtung zur Bestimmung einer körperlichen Form mit einer vorgegebenen physikalischen Zieleigenschaft bereitgestellt.

Die Vorrichtung weist eine Erfassungseinrichtung zur Erzeugung eines Formdatensatzes für eine körperliche Form auf, welcher Orte an oder auf der körperlichen Form identifiziert.

Die Vorrichtung weist eine Berechnungseinrichtung zur Berechnung einer Sensitivitätslandschaft aus dem Formdatensatz auf.

Die Sensitivitätslandschaft umfasst den Formdatensatz und ein Änderungsmaß für die Veränderung der Zieleigenschaft der körperlichen Form bei einer Änderung der körperlichen Form in einer jeweiligen Normalrichtung an mehreren der durch den Formdatensatz identifizierten Orte an oder auf der körperlichen Form.

Die Berechnungseinrichtung ist eine auf Basis maschinellen Lernens angelernte Künstliche-Intelligenz-Vorrichtung, welche einen Formdatensatz als Eingangsdatensatz auf eine Sensitivitätslandschaft als Ausgangsdatensatz abbildet.

Das maschinelle Lernen erfolgt in Abhängigkeit von mehreren Lerndatensätzen erfolgt.

Jeder Lerndatensatz umfasst einen Lern-Formdatensatz für eine Lern-körperliche-Form und eine Lern-Sensitivitätslandschaft als Änderungsmaß für die Veränderung der Zieleigenschaft der Lern-körperlichen-Form bei einer Änderung der Lern-körperlichen-Form in einer jeweiligen Normalrichtung an mehreren der durch den Lern-Formdatensatz identifizierten Orte an oder auf der Lern-körperlichen-Form.

Die Vorrichtung weist eine Anzeigeeinrichtung zur Anzeige der Sensitivitätslandschaft in Abhängigkeit von dem Formdatensatz auf.

In Ausführungsformen ist die Anzeigeeinrichtung ein Bildschirm eines Erweiterte-Realität-Geräts (Augmented-Reality-Gerät), insbesondere einer Brille, eines Headsets, eines Tablets, eines tragbaren Computers und/oder eines Mobiltelefons. Die Anzeigeeinrichtung kann auch ein Bildschirm eines Virtuelle-Realität-Geräts (Virtual-Reality-Gerät) sein oder ein einfacher Projektor.

Unter einem Erweiterte-Realität-Gerät wird insbesondere ein Gerät verstanden, welches ein Anzeigen von Information für den Benutzer computergestützt erweitert. Bei dem Anzeigen von Information kann es sich um das Anzeigen der Sensitivitätslandschaft in Abhängigkeit von dem Formdatensatz handeln. Bei der computergestützten Erweiterung kann es sich um ein Anzeigen der Sensitivitätslandschaft in Abhängigkeit von dem Formdatensatz zusammen mit dem Formdatensatz handeln.

Im Falle eines gegenständlichen körperlichen Modells (z. B. eines Lehmmodel, clay model) kann das computergestützt erweiterte Anzeigen der Sensitivitätslandschaft in Abhängigkeit von dem Formdatensatz derart in dem Erweiterte-Realität-Gerät dargestellt werden, dass es für den Benutzer als auf das gegenständliche körperliche Modell projiziert erscheint. Denkbar ist auch eine Darstellung in einem Virtuelle-Realität-Gerät oder eine einfache Projektion mit einem Projektor (z.B. Beamer).

Im Falle eines digitalen Modells (z. B. eines CAD-Models) kann das computergestützt erweiterte Anzeigen der Sensitivitätslandschaft in Abhängigkeit von dem Formdatensatz und des Formdatensatzes derart in dem Erweiterte-Realität-Gerät dargestellt werden, dass die Sensitivitätslandschaft für den Benutzer als auf das digitale körperliche Modell projiziert erscheint.

In Ausführungsformen weist die Vorrichtung eine Abtasteinrichtung auf ähnlich der in Bezug auf die beiden Verfahren beschriebenen Abtasteinrichtung.

Die Erfassungseinrichtung ist insbesondere eine rechnergestützte Erfassungseinrichtung. Die Erfassungseinrichtung kann im Falle eines gegenständlichen körperlichen Modells eingerichtet sein, um die von der Abtasteinrichtung erfassten Abtastdaten zu empfangen und in Formdaten umzuwandeln. Die Erfassungseinrichtung kann im Falle eines digitalisierten körperlichen Modells zum Erfassen der digitalen Formdaten eingerichtet sein.

Weiter Aspekte und Ausführungsformen, welche in Bezug auf die beiden Verfahren beschrieben wurden, gelten auch für Vorrichtung zur Bestimmung einer körperlichen Form mit einer vorgegebenen physikalischen Zieleigenschaft.

In Ausführungsformen weist die Vorrichtung ferner eine Speichereinrichtung auf zum Speichern der berechneten Sensitivitätslandschaft in Abhängigkeit von dem Formdatensatz.

Aspekte und Ausführungsformen, welche in Bezug auf das Speichern mehrerer Lerndatensätze beschrieben wurden, gelten auch für die Speichereinrichtung zum Speichern der berechneten Sensitivitätslandschaft in Abhängigkeit von dem Formdatensatz.

In Ausführungsformen weist die Vorrichtung ferner eine Fertigungsvorrichtung auf zur Fertigung einer körperlichen Form mit der vorgegebenen Zieleigenschaft, insbesondere einer Fertigungsvorrichtung zur additiven Herstellung mit Hilfe eines Strangs rasch abbindender Masse.

Aspekte und Ausführungsformen, welche in Bezug auf das Fertigen einer körperlichen Form mit der vorgegebenen physikalischen Zieleigenschaft gemäß dem in Abhängigkeit von der berechneten Sensitivitätslandschaft geänderten Formdatensatz beschrieben wurden, gelten auch für die Fertigungsvorrichtung zur Fertigung einer körperlichen Form mit der vorgegebenen Zieleigenschaft.

In Ausführungsformen weist die Vorrichtung eine Rechenvorrichtung auf. Die Rechenvorrichtung kann die Berechnungseinrichtung, die Erfassungseinrichtung, die Simulationseinheit und/oder die Speichereinrichtung aufweisen.

Die für die vorgeschlagenen Verfahren beschriebenen Ausführungsformen und Merkmale gelten für die vorgeschlagene Vorrichtung entsprechend.

Die jeweilige Einheit, zum Beispiel die Rechenvorrichtung, Berechnungseinrichtung, Erfassungseinrichtung, Simulationseinheit, die Speichereinrichtung und/oder die Steuerungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Weiterhin wird ein Computerprogrammprodukt vorgeschlagen, welches auf einer programmgesteuerten Einrichtung die Durchführung des wie oben und im Folgenden erläuterten Verfahrens veranlasst. Insofern werden die Verfahren insbesondere als computerimplementierte Verfahren durchgeführt.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Denkbar ist auch eine Implementierung des Computerprogrammprodukts als Softwaredienst, insbesondere von verteilten Speichermitteln, wie Cloud-Services.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein Ablaufdiagramm für eine Ausführungsform eines Verfahrens zum Bestimmen einer körperlichen Form mit einer vorgegebenen physikalischen Zieleigenschaft;
- Fig. 2: zeigt ein Ablaufdiagramm für eine Ausführungsform eines Verfahrens zum Bestimmen einer körperlichen Form mit einer vorgegebenen physikalischen Zieleigenschaft;
- Fig. 3: zeigt eine erste Variante für das Erstellen eines Formdatensatzes;
- Fig. 4: zeigt eine zweite Variante für das Erstellen eines Formdatensatzes;
- Fig. 5: zeigt ein Ablaufdiagramm für eine Ausführungsform eines Verfahrens zur Herstellung einer Berechnungseinrichtung, welche eine Sensitivitätslandschaft aus einem Formdatensatz berechnet;
- Fig. 6: zeigt eine schematische Darstellung einer Ausführungsform für eine Vorrichtung zur Bestimmung einer körperlichen Form mit einer vorgegebenen physikalischen Zieleigenschaft;
- Fig. 7: zeigt ein Ausführungsbeispiel für die Rechenvorrichtung aus Fig. 6;
- Fig. 8: zeigt ein weiteres Ausführungsbeispiel einer Vorrichtung zur Bestimmung einer körperlichen Form mit einer vorgegebenen physikalischen Zieleigenschaft; und
- Fig. 9: zeigt ein Beispiel für eine Berechnung einer Sensitivitätslandschaft aus einem Formdatensatz mit Hilfe einer angelernten Berechnungseinrichtung.

In den Figuren sind gleiche oder funktionsgleiche Elemente mit denselben Bezugszeichen versehen worden, sofern nichts anderes angegeben ist.

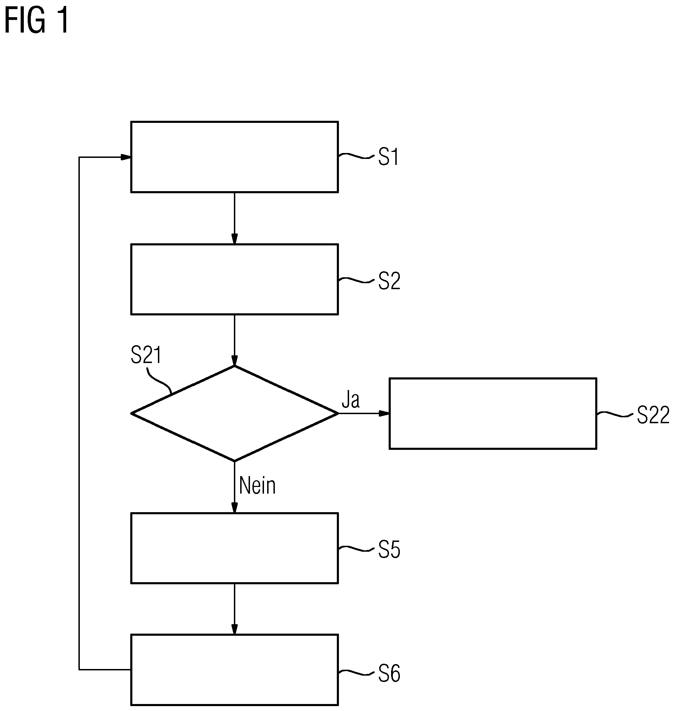

Figur 1 zeigt ein Ablaufdiagramm für eine Ausführungsform eines Verfahrens zum Bestimmen einer körperlichen Form mit einer vorgegebenen physikalischen Zieleigenschaft.

Im ersten Schritt S1 des Verfahrens wird ein Formdatensatz aus Formdaten eines körperlichen Modells erstellt. Der Formdatendatensatz identifiziert daher Orte an oder auf einer körperlichen Form, welche den Formdaten entspricht.

Zum Bestimmen einer körperlichen Form mit einer vorgegebenen physikalischen Zieleigenschaft wird zunächst eine körperliche Form als ein Startpunkt für das Verfahren bereitgestellt. Das Bereitstellen der körperlichen Form für das Verfahren kann durch ein Bereitstellen eines gegenständlichen körperlichen Modells (z.B. Tonmodell, engl. clay model) oder eines digitalisierten körperlichen Modells (z. B. CAD-Modell) erfolgen.

Für die bereitgestellte körperliche Form werden dann Formdaten erfasst. Formdaten sind Daten, welche die körperliche Form in abstrakter Weise beschreiben. Die Formdaten sind insbesondere Daten, welche die körperliche Form in digitaler bzw. mathematischer Weise beschreiben.

In Schritt S1 des Verfahrens wird dann ein Formdatensatz für die körperliche Form erstellt. Der Formdatensatz identifiziert beispielsweise Orte an oder auf der Oberfläche der körperlichen Form. Der Formdatensatz umfasst die mehreren Orte auf oder an der körperlichen Form beispielsweise in der Art von Ortsdatensätzen. Die Ortsdatensätze sind beispielsweise Ortskoordinaten.

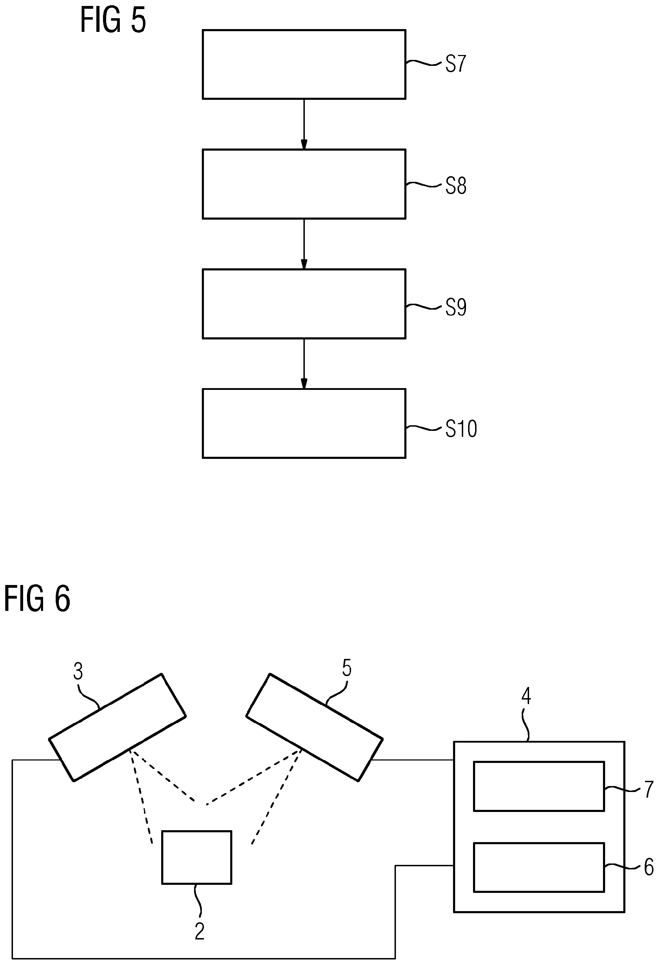

Das Verfahren aus Figur 1 kann zum Beispiel durch eine Vorrichtung, wie sie in Fig. 6 gezeigt ist, durchgeführt werden. Figur 6 veranschaulicht eine Ausführungsform für eine Vorrichtung zur Bestimmung einer körperlichen Form 1 mit einer vorgegebenen physikalischen Zieleigenschaft. Die Vorrichtung in Fig. 6 weist ein gegenständliches körperliches Modell 2 der körperlichen Form 1 auf. Des Weiteren weist sie und eine Abtasteinrichtung 3 zum Erfassen der Formdaten der körperlichen Form in Schritt S1 des Verfahrens aus Fig. 1 auf. Die Abtasteinrichtung 3 ist beispielsweise ein 3D-Scanner zum dreidimensionalen Abtasten des körperlichen Modells 2. Der 3D-Scanner 3 ist drahtlos oder drahtgebunden mit einer Rechenvorrichtung 4 verbunden, um die von dem 3D-Scanner erfassten Abtastdaten an die Rechenvorrichtung 4 zu senden. Die Rechenvorrichtung 4 weist eine Erfassungseinrichtung 6 auf, welche die von der Abtasteinrichtung 3 übermittelten Abtastdaten des körperlichen Modells 2 empfängt und daraus einen Formdatensatz für die dem körperlichen Modell 2 entsprechende körperliche Form 1 erzeugt. Des Weiteren weist die Rechenvorrichtung 4 eine maschinell angelernte Berechnungseinrichtung 7 als KI-Einrichtung zur Berechnung einer Sensitivitätslandschaft in Abhängigkeit von dem Formdatensatz auf. Die Vorrichtung in Figur 6 weist ferner eine Anzeigeeinrichtung 5 auf. Die Anzeigeeinrichtung 5 kann zum Beispiel ein Projektor oder ein Bildschirm eines Erweiterte-Realität-Geräts (Augmented-Reality-Gerät) sein.

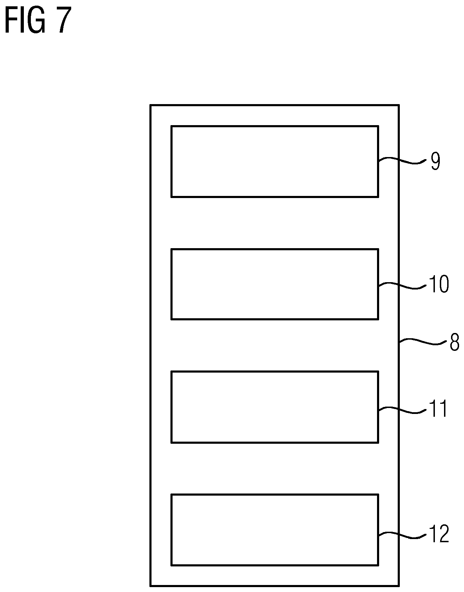

Ein weiteres Ausführungsbeispiel für die Rechenvorrichtung aus Fig. 6 ist in Fig. 7 gezeigt. Die Rechenvorrichtung 8 in Fig. 7 weist auf: eine maschinell angelernte Berechnungseinheit 9 ähnlich der Berechnungseinheit 7 aus Fig. 6; eine Erfassungseinrichtung 10 ähnlich der Erfassungseinrichtung 6 aus Fig. 6; eine Simulationseinheit 11 zum Durchführen eines Simulationsverfahrens zum Erfassen der Zieleigenschaft und eine Speichereinrichtung 12 zum Speichern der berechneten Sensitivitätslandschaft in Abhängigkeit von dem Formdatensatz.

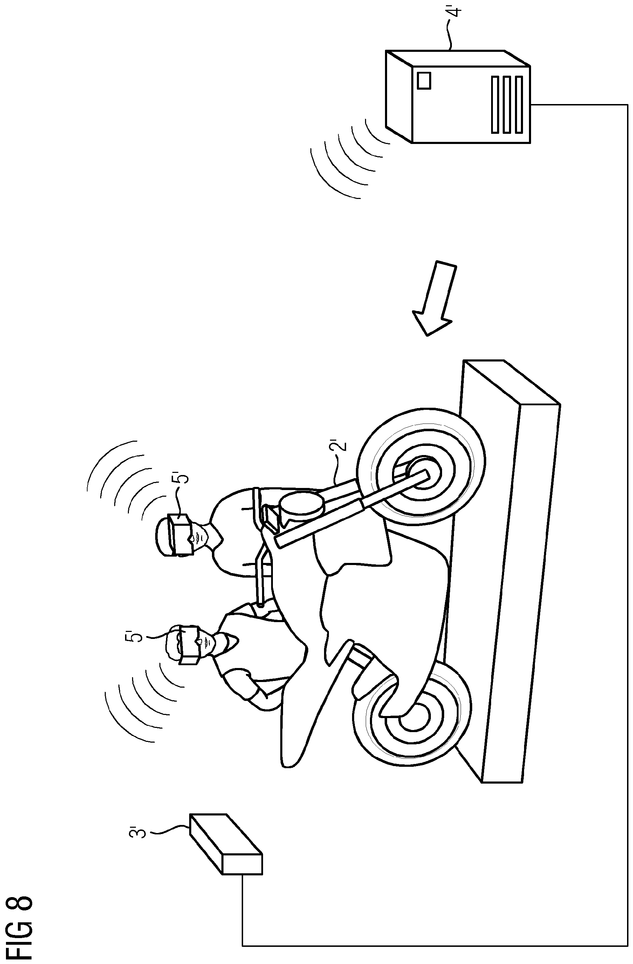

Ein weiteres Beispiel für eine Vorrichtung mit der das Verfahren aus Fig. 1 durchgeführt werden kann, ist in Fig. 8 gezeigt. Mit dem in Fig. 8 gezeigten Ausführungsbeispiel einer Vorrichtung kann eine verbesserte Bestimmung einer äußeren Fahrzeugform eines Motorrads mit minimalem Strömungswiderstand mit Hilfe von Oberflächen-Sensitivitätskarten durchgeführt werden. Die körperliche Form ist in diesem Beispiel die äußere Fahrzeugform des Motorrads und die vorgegebene physikalische Zieleigenschaft der Strömungswiderstand. Die Oberflächen-Sensitivitätskarten sind mit Hilfe eines maschinell angelernten Systems berechnet.

In Fig. 8 ist ein körperliches Modell 2' eines Motorrads gezeigt. Die Vorrichtung in Fig. 8 weist ferner einen Windkanal auf (nicht gezeigt), in dem sich das Motorradmodell 2' befindet. Des Weiteren zeigt Fig. 8 einen 3D-Scanner 3' als Abtasteinrichtung zum dreidimensionalen Abtasten der äußeren Motorradform zum Erfassen der Formdaten. Der 3D-Scanner 3' ist drahtlos oder drahtgebunden mit einer Rechenvorrichtung 4' verbunden, um von dem 3D-Scanner erfasste Abtastdaten an die Rechenvorrichtung 4' zu senden. Die Rechenvorrichtung 4' ist beispielsweise wie die Rechenvorrichtung 8 aus Fig. 7 gestaltet. Die Rechenvorrichtung 4' weist beispielsweise eine Erfassungseinrichtung 10 auf, welche die von der Abtasteinrichtung 3' übermittelten Abtastdaten des Motorradmodells 2' empfängt und daraus einen Formdatensatz erzeugt, welcher der äußeren Form des Motorradmodells 2' entspricht. Des Weiteren weist die Rechenvorrichtung 4' eine maschinell angelernte Berechnungseinrichtung 9' als KI-Einrichtung zur Berechnung einer Sensitivitätslandschaft in Abhängigkeit des Formdatensatzes auf. Des Weiteren weist die Vorrichtung aus Fig. 8 eine Anzeigeeinrichtung 5' auf. Die Anzeigeeinrichtung 5' weist mehrere Bildschirme von Erweiterte-Realität-Brillen auf.

In diesem Beispiel des Verfahrens, das durch die Vorrichtung von Fig. 8 durchgeführt wird, wird in Schritt S1 zunächst ein gegenständliches körperliches Modell 2' eines Motorrads bereitgestellt, wie beispielsweise ein Tonmodell eines Motorrads. Für dieses Motorrad-Modell 2' werden in Schritt S1 Formdaten erfasst. Formdaten sind in diesem Beispiel Oberflächenformdaten. Das Erfassen der Oberflächenformdaten für das Motorrad-Modell 2' erfolgt durch Abtasten des Motorrad-Modells 2' mit Hilfe des 3D-Scanners 3' als Abtasteinrichtung. Der 3D-Scanner 3' übermittelt die von dem 3D-Scanner 3' erfassten Abtastdaten an die Rechenvorrichtung 4' drahtlos oder drahtgekoppelt. Die Rechenvorrichtung 4' erfasst Oberflächenformdaten des Motorrad-Modells 2' in Abhängigkeit von den Abtastdaten. Insbesondere weist die Rechenvorrichtung 4' eine Erfassungseinrichtung 10' auf, welche die Abtastdaten von dem 3D-Scanner 3' empfängt und Oberflächenformdaten des Motorrad-Modells 2' in Abhängigkeit von den Abtastdaten erstellt.

Die Rechenvorrichtung 4' erzeugt in Abhängigkeit von den erfassten Oberflächenformdaten einen Formdatensatz für das Motorrad-Modell 2'. Der Formdatensatz identifiziert mehrere Orte auf der Oberfläche der äußeren Fahrzeugform in der Art von Ortsvektoren.

Im zweiten Schritt S2 des Verfahrens wird eine Zieleigenschaft für die körperliche Form erfasst, welche dem erstellten Formdatensatz entspricht. Die Zieleigenschaft ist eine physikalische Eigenschaft bzw. physikalische Größe bzw. physikalische Funktion der körperlichen Form, deren Wert durch das Verfahren in Richtung zu einem vorbestimmten Wert, z. B. einem Minimalwert oder einem Maximalwert, verändert, insbesondere verbessert bzw. optimiert, werden soll. Das Erfassen der Zieleigenschaft kann mit Hilfe eines Messens (z. B. im Labor, in einem Windkanal) und/oder eines Simulationsverfahrens erfolgen.

Bei dem Beispiel der Bestimmung einer äußeren Motorradform, ist die Zieleigenschaft der Strömungswiderstand der äußeren Fahrzeugform des Motorrad-Modells 2'. Das Erfassen des Strömungswiderstands der äußeren Motorradform erfolgt in dem Beispiel durch Messen des Strömungswiderstands in dem Windkanal. Das Erfassen der Zieleigenschaft kann unter Berücksichtigung von erfassten Randbedingungen erfolgen. Die Randbedingungen legen Wertebereiche fest, für welche das Messen und/oder das Simulieren der Zieleigenschaft erfolgen/erfolgt. Dadurch können Wertebereiche festgelegt werden, für welche die körperliche Form mit einer vorgegebenen physikalischen Zieleigenschaft durch das Verfahren bestimmt wird.

Das Erfassen der Randbedingungen kann bei einem Messen der Zieleigenschaft beispielweise ein Einstellen der Randbedingungen an Laborgeräten sein. Das Erfassen der Randbedingungen kann bei einem Simulationsverfahren zur Simulation der Zieleigenschaft beispielweise ein Eingeben der Randbedingungen in eine Simulationseinheit als Parameter des Simulationsverfahrens sein.

Bei dem Beispiel der Bestimmung der Motorradform erfolgt das Messen des Strömungswiderstands der äußeren Motorradform in dem Windkanal. Das Messen des Strömungswiderstands erfolgt dabei unter Berücksichtigung der Randbedingung, dass der Wind in dem Windkanal "von vorne" kommt, also frontal in Richtung auf das Motorrad zu gerichtet ist (angedeutet durch einen Pfeil in Fig. 8). Eine weitere Randbedingung bei dem Messen des Strömungswiderstands ist die Windstärke, welche einen für das Fahren eines Motorrads typischen Windstärkebereich umfasst, sowie die Windkanalkonfiguration, insbesondere die geometrische Form des Windkanals. Die Windrichtung, der Windstärkebereich und/oder die Windkanalkonfiguration können beispielsweise in dem Windkanal-Labor voreingestellt werden. Die Windrichtung, der Windstärkebereich und/oder die Windkanalkonfiguration können aber auch durch einen Anwender des Verfahrens, z. B. interaktiv, eingegeben werden. Die Eingabe durch den Anwender kann beispielsweise mit Hilfe einer Eingabeeinheit eines Computers, insbesondere eines Touchscreens, einer Tastatur und/oder einer Maus, oder einer Kamera, insbesondere zur Gestenerkennung, erfolgen.

Im folgenden Schritt S21 wird geprüft, ob die erfasste Zieleigenschaft einen vorbestimmten Wert für die Zieleigenschaft, z. B. einen Minimalwert eines Strömungswiderstandes, erreicht hat.

Hat die erfasste Zieleigenschaft in Schritt S21 einen vorbestimmten Wert für die Zieleigenschaft erreicht, dann wird in Schritt S22 der für die körperliche Form erstellte Formdatensatz ausgegeben. Die durch den ausgegebenen Formdatensatz bestimmte körperliche Form kann dann zum Beispiel als Prototyp gefertigt werden. Das Verfahren zur Bestimmung einer körperlichen Form mit einer vorgegebenen Zieleigenschaft ist beendet.

Bei dem Beispiel der Bestimmung der Motorradform wird in Schritt S21 geprüft, ob der in dem Windkanal gemessene Strömungswiderstand einen vorbestimmten Minimalwert für den Strömungswiderstand erreicht hat. Wurde der vorbestimmte Minimalwert für den Strömungswiderstand der äußeren Motorradform erreicht, dann wird in Schritt S22 der für die äußere Motorradform erstellte Formdatensatz in Form der Ortsvektoren ausgegeben. Die durch die ausgegebenen Ortsvektoren bestimmte äußere Motorradform kann dann zum Beispiel als Prototyp gefertigt werden. Das Verfahren zur Bestimmung der äußeren Motorradform ist damit beendet.

Hat die erfasste Zieleigenschaft in Schritt S21 einen vorbestimmten Wert für die Zieleigenschaft nicht erreicht, dann wird im dritten Schritt S5 eine Sensitivitätslandschaft für den Formdatensatz der körperlichen Form bestimmt.

Das Bestimmen der Sensitivitätslandschaft für den Formdatensatz in Schritt S5 umfasst das Bestimmen von Sensitivitätswerten für mehrere Orte an oder auf der körperlichen Form in Abhängigkeit von dem Formdatensatz. Ein Sensitivitätswert gibt für einen Ort an oder auf der körperlichen Form ein Änderungsmaß an für die Veränderung der Zieleigenschaft der körperlichen Form bei einer Änderung der körperlichen Form im Bereich des Ortes durch eine Änderung des Formdatensatzes.

Die für den Formdatensatz bestimmte Sensitivitätslandschaft ist beispielsweise eine Oberflächen-Sensitivitätskarte für die
körperliche Form. In diesem Fall gibt sie für Orte an der Oberfläche der körperlichen Form an, wie die körperliche Form an diesen Oberflächenorten geändert werden müsste, so dass sich die Zieleigenschaft der körperlichen Form in einem wiederholten Durchlaufen der Verfahrensschritte in Richtung zu dem vorbestimmten Wert ändert.

Zum Beispiel kann die Sensitivitätslandschaft für Orte an der Oberfläche der körperlichen Form angeben, ob und in welchem Ausmaß die körperliche Form an diesen Orten in einer Normalrichtung nach innen verformt ("hineingedrückt") oder nach außen verformt ("herausgezogen") werden müsste, um die Zieleigenschaft der körperlichen Form in einem wiederholten Durchlaufen der Verfahrensschritte in Richtung zu dem vorbestimmten Wert zu ändern. Beispielsweise ist ein Sensitivitätswert für einen bestimmten Ort an oder auf der körperlichen Form ein Betrag und ein Vorzeichen eines Normalenvektors an diesem Ort. Der Normalenvektor gibt für den bestimmten Ort an, wie die sich die Zieleigenschaft, z. B. der Strömungswiderstand, ändert, wenn die körperliche Form im Bereich dieses Ortes gemäß dem Betrag und der Richtung, d. h. des Vorzeichens, des Normalenvektors geändert wird.

Das Bestimmen der Sensitivitätslandschaft erfolgt durch ein Berechnen der Sensitivitätslandschaft mit Hilfe einer maschinell angelernten Berechnungseinrichtung. Eine maschinell angelernte Berechnungseinrichtung ist eine Einrichtung mit künstlicher Intelligenz auf Basis maschinellen Lernens. Maschinelles Lernen bzw. künstliche Intelligenz ist die Fähigkeit computergestützter Systeme, Methoden anzuwenden und Aufgaben zu lösen, die, wenn sie vom Menschen gelöst werden, Intelligenz erfordern. Das Anwenden des Verfahrens zum maschinellen Lernen zum Erzeugen einer Berechnungseinrichtung bzw. einer artifiziellen Intelligenz kann mit Hilfe eines Maschinenlernalgorithmus, wie beispielsweise eines neuronalen Netzes, erfolgen.

Bei dem Beispiel der Bestimmung der Motorradform wird in Schritt S21 geprüft, ob der in dem Windkanal gemessene Strömungswiderstand den vorbestimmten Wert für den Strömungswiderstand erreicht hat. Ist dies nicht der Fall, dann wird im dritten Schritt S5 eine Oberflächen-Sensitivitätskarte für die Ortsvektoren der äußeren Motorradform bestimmt.

Die Oberflächen-Sensitivitätskarte der äußeren Motorradform wird in Schritt S5 mit Hilfe der angelernten Berechnungseirichtung 9' (KI-Einrichtung) in Abhängigkeit von den Ortsvektoren der äußeren Motorradform berechnet. Die Oberflächen-Sensitivitätskarte gibt für die durch die Ortsvektoren definierten Orte auf der Oberfläche der Motorradform jeweils an, wie und in welchem Maße die äußere Motorradform an diesen Orten in einer Normalrichtung nach innen verformt ("hineingedrückt") oder nach außen verformt ("herausgezogen") werden müsste, um den Strömungswiderstand der äußeren Motorradform in einem wiederholten Durchlaufen der Verfahrensschritte in Richtung zu dem vorgegebenen Minimalwert des Strömungswiderstands zu ändern. Die Oberflächen-Sensitivitätskarte umfasst dabei die Ortsvektoren und die zu den Ortsvektoren zugehörigen Sensitivitätswerte. Ein Sensitivitätswert für einen bestimmten Ortsvektor umfasst dabei einen Betrag eines Normalenvektors, der das Ausmaß der Änderung angibt, die nötig ist, um den Strömungswiderstand zu minimieren, und ein Vorzeichen des Normalenvektors, der die Richtung der Änderung angibt.

Die in Schritt S5 bei dem Beispiel des Motorrad-Modells 2' mit der KI-Einrichtung 10' berechnete Oberflächen-Sensitivitätskarte kann mit Hilfe der Anzeigeeinrichtung 5' in Abhängigkeit von den die äußere Motorradform beschreibenden Ortsvektoren angezeigt werden. Zum Beispiel kann die berechnete Oberflächen-Sensitivitätskarte so auf Bildschirmen der beiden gezeigten Erweiterte-Realität-Brillen 5' dargestellt werden, dass die Oberflächen-Sensitivitätskarte für die Träger der Brillen 5' als auf das Motorrad-Modell 2' projiziert erscheint. Dadurch erhalten die Träger der Erweiterte-Realität-Brillen 5' für die durch den Satz von Ortsvektoren identifizierten Orte auf der äußeren Form des Motorrads eine direkte Information darüber, wie die äußere Motorradform im Bereich dieser Orte in einer jeweiligen Normalrichtung geändert werden müsste, um den Strömungswiderstand zu minimieren.

Die zu bestimmende äußere Fahrzeugform ist in der Regel eine unbekannte äußere Fahrzeugform, welche einem unbekannten Ortskoordinatensatz entspricht. Durch die angelernte KI-Einrichtung kann für diese unbekannte äußere Fahrzeugform als Eingangsdatensatz schnell und mit geringem Rechenaufwand eine zugehörige Oberflächen-Sensitivitätskarte als Ausgangsdatensatz berechnet werden. Dies erfolgt insbesondere mit wesentlich geringerem Rechenaufwand als bei einer aufwendigen Bestimmung der Oberflächen-Sensitivitätskarte mit Hilfe einer Simulation, welche ein Simulationsverfahren anwendet.

Im nächsten Schritt S6 wird der Formdatensatz der körperlichen Form in Abhängigkeit von der berechneten Sensitivitätslandschaft geändert. Zum Beispiel kann der Formdatensatz der körperlichen Form so geändert werden, dass die körperliche Form an den Orten, für welche die Sensitivitätslandschaft ein Nach-innen-Verformen als vorteilhaft angibt, nach innen verformt wird. Das Ausmaß des Nach-innen-Verformens erfolgt dabei in Abhängigkeit der Sensitivitätslandschaft. Eine vorteilhafte Veränderung der körperlichen Form ist dabei eine Veränderung der körperlichen Form, so dass sich die vorgegebene physikalische Zieleigenschaft in Richtung zu dem vorbestimmten Wert ändert. Entsprechendes gilt für ein Ändern des Formdatensatzes der körperlichen Form in Bezug auf ein Nachaußen-Verformen.

Der in Schritt S6 geänderte Formdatensatz wird in einem wiederholten Schritt S1 als Formdatensatz einer körperlichen Form als ein neuer Startpunkt für das Verfahren bereitgestellt. Die Zieleigenschaft kann sich durch das Ändern der neuen körperlichen Form, welche durch den geänderten Formdatensatz beschrieben wird, ändern. Dann wird in Schritt S2 ein geänderter Wert für die Zieleigenschaft erfasst.

Wenn nach einem wiederholten Durchlaufen der Schritte S1 bis S6 für einen jeweils geänderten Formdatensatz und eine dazu jeweils neu erfasste Zieleigenschaft in Schritt S21 die erfasste Zieleigenschaft den vorbestimmten Wert für die Zieleigenschaft erreicht hat, dann wird in Schritt S22 der zu diesem Zeitpunkt vorliegende Formdatensatz ausgegeben, womit das Verfahren beendet ist.

Bei dem Beispiel der äußeren Motorradform wird der die äußere Motorradform beschreibende Satz von Ortsvektoren in Abhängigkeit von der durch die Berechnungseinrichtung 9' (KI-Einrichtung) berechneten Oberflächen-Sensitivitätskarte geändert, so dass sich der Strömungswiderstand der äußeren Fahrzeugform in Richtung zu einem minimalen Strömungswiderstand ändert.

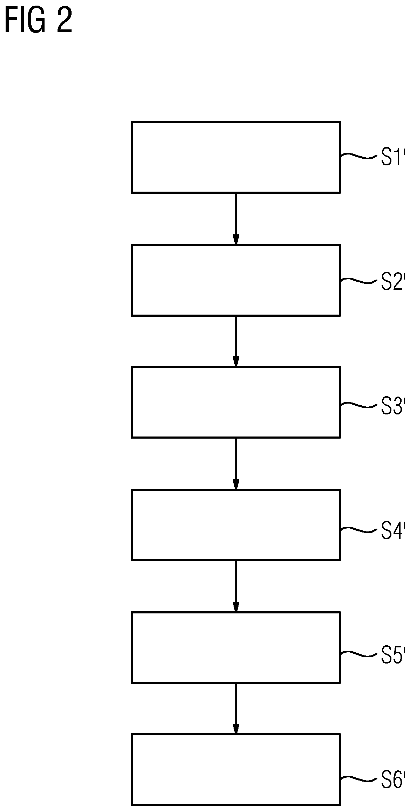

Fig. 2 zeigt ein Ablaufdiagramm für eine weitere Ausführungsform eines Verfahrens ähnlich dem Verfahren von Fig. 1 zum Bestimmen einer körperlichen Form mit einer vorgegebenen physikalischen Zieleigenschaft.

In Schritt S1' wird ein Formdatensatz aus Formdaten eines körperlichen Modells erstellt. Der Schritt S1' entspricht dem Schritt S1 des im Zusammenhang mit Fig. 1 beschriebenen Verfahrens.

In zweiten Schritt S2' des Verfahrens wird eine Zieleigenschaft für die körperliche Form erfasst, welche dem erstellten Formdatensatz entspricht. Der Schritt S2' entspricht dem Schritt S2 des im Zusammenhang mit Fig. 1 beschriebenen Verfahrens.

Das Verfahren in Fig. 2 umfasst zusätzlich zu den Schritten S1, S2, S5 und S6 des Verfahrens aus Fig. 1 zwei weitere Schritte S3' und S4'.

Im dritten Schritt S3' des Verfahrens von Fig. 2 wird eine Sensitivitätslandschaft für den Formdatensatz bestimmt. Die Sensitivitätslandschaft umfasst den Formdatensatz und Sensitivitätswerte für mehrere der durch den Formdatensatz identifizierten Orte an oder auf der körperlichen Form. Insbesondere werden daher also im dritten Schritt S3' Sensitivitätswerte für mehrere Orte an oder auf der körperlichen Form in Abhängigkeit von dem Formdatensatz bestimmt. Ein Sensitivitätswert gibt für einen Ort an oder auf der körperlichen Form ein Änderungsmaß an für die Veränderung der Zieleigenschaft der körperlichen Form bei einer Änderung der körperlichen Form im Bereich des Ortes durch eine Änderung des Formdatensatzes.

Das Bestimmen der Sensitivitätslandschaft kann mit Hilfe eines Bestimmens von Sensitivitätswerten durch ein Simulationsverfahren erfolgen und/oder kann mit Hilfe eines Berechnens der Sensitivitätswerte durch eine maschinell angelernte KI-Einrichtung erfolgen. Das Erzeugen der Sensitivitätslandschaft erfolgt beispielsweise in ersten Durchläufen der Verfahrensschritte S1' bis S3' mit Hilfe eines Simulationsverfahrens und erfolgt beispielsweise in späteren Durchläufen der Verfahrensschritte S1' bis S3' mit Hilfe einer maschinell angelernten KI-Einrichtung (Berechnungseinrichtung).

Durch das Bestimmen der Sensitivitätslandschaft in Abhängigkeit von dem Formdatensatz kann damit beispielsweise die Sensitivitätslandschaft zusammen mit dem Formdatensatz als ein Lerndatensatz bereitgestellt werden für das Anlernen der KI-Einrichtung im nächsten Schritt S4'. Insbesondere kann die KI-Einrichtung durch das Bereitstellen von mehreren Formdatensätzen und den dazu erzeugten Sensitivitätslandschaften, also den mehreren Lerndatensätzen, im nächsten Schritt S4' maschinell angelernt werden.

Ein Beispiel für eine Implementierung des Verfahrens aus Fig. 2 ist eine verbesserte Bestimmung einer äußeren Fahrzeugform eines Motorrads mit minimalem Strömungswiderstand mit Hilfe von Oberflächen-Sensitivitätskarten durch die in Fig. 8 dargestellte Vorrichtung. Der Schritt S1' der Erzeugung des Formdatensatzes für die äußere Motorradform und der Schritt S2' des Erfassens der Zieleigenschaft für die äußere Motorradform wurden bereits bei der Beschreibung von Fig. 1 dargestellt.

Bei dem Verfahren in Fig. 2 erfolgen nach dem Schritt S2' zwei weitere Schritte S3' und S4' bevor ein dem Schritt S5 des Verfahrens aus Fig. 1 entsprechender Schritt S5' erfolgt.

In Schritt S3' wird eine Oberflächen-Sensitivitätskarte der äußeren Motorradform mit Hilfe eines Simulationsverfahrens und/oder mit Hilfe einer angelernten KI-Einrichtung in Abhängigkeit von den Ortsvektoren der äußeren Motorradform berechnet.

Das Erzeugen der Oberflächen-Sensitivitätskarte der äußeren Motorradform erfolgt beispielsweise in ersten Durchläufen der Verfahrensschritte mit Hilfe eines Simulationsverfahrens, welches beispielsweise durch die Simulationseinheit 11 der Rechenvorrichtung 4' ausgeführt werden kann. Das Erzeugen der Oberflächen-Sensitivitätskarte der äußeren Motorradform erfolgt beispielsweise in späteren Durchläufen der Verfahrensschritte mit Hilfe der maschinell angelernten Berechnungseinrichtung 9'.

Die Oberflächen-Sensitivitätskarte gibt für die durch die Ortsvektoren definierten Orte auf der Oberfläche der Motorradform jeweils an, wie und in welchem Maße die äußere Motorradform an diesen Orten in einer Normalrichtung nach innen verformt ("hineingedrückt") oder nach außen verformt ("herausgezogen") werden müsste, um den Strömungswiderstand der äußeren Motorradform in einem wiederholten Durchlaufen der Verfahrensschritte in Richtung zu dem vorgegebenen Minimalwert des Strömungswiderstand Wert zu ändern. Die Oberflächen-Sensitivitätskarte umfasst dabei die Ortsvektoren und die zu den Ortsvektoren zugehörigen Sensitivitätswerte. Ein Sensitivitätswert für einen bestimmten Ortsvektor umfasst dabei einen Betrag eines Normalenvektors, der das Ausmaß der Änderung angibt, die nötig ist, um den Strömungswiderstand zu minimieren, und ein Vorzeichen des Normalenvektors, der die Richtung der erforderlichen Änderung angibt.

Durch das Bestimmen der Oberflächen-Sensitivitätskarte für die äußere Motorradform in Abhängigkeit von den Ortsvektoren, welche die äußere Motorradform definieren, kann damit die Oberflächen-Sensitivitätskarte zusammen mit den Ortsvektoren als ein Lerndatensatz bereitgestellt werden für das Anlernen der KI-Einrichtung 9' im nächsten Schritt S4'.

Im vierten Schritt S4' des Verfahrens aus Fig. 2 wird ein Verfahren zum maschinellen Lernen zum Erzeugen einer Berechnungseinrichtung (KI-Einrichtung, artifizielle Intelligenz) angewendet.

Das Anwenden des Verfahrens zum maschinellen Lernen zum Erzeugen einer Berechnungseinrichtung bzw. einer artifiziellen Intelligenz erfolgt mit Hilfe eines Maschinenlernalgorithmus. Mit Hilfe des Algorithmus wird in Abhängigkeit von den mehreren Formdatensätzen und den dazu erzeugten Sensitivitätslandschaften ein künstliches System (die Berechnungseinrichtung) angelernt, so dass es nach dem Anlernen auch für einen unbekannten Formdatensatz als Eingangsdatensatz eine zugehörige Sensitivitätslandschaft als Ausgangsdatensatz berechnen kann.

Beispielsweise bildet jeder der mehreren Formdatensätze zusammen mit der dazu erzeugten Sensitivitätslandschaft einen jeweiligen Lerndatensatz. Mit Hilfe des Maschinenlernalgorithmus wird die Berechnungseinrichtung basierend auf den mehreren Lerndatensätzen angelernt. Die Lerndatensätze sind Beispieldatensätze zum Anlernen der Berechnungseinrichtung.

Das maschinelle Anlernen kann durch Klassifikation der mehreren Lerndatensätze in Kategorien, Erkennen von Mustern in den mehreren Lerndatensätzen und Generalisieren von erkannten Kategorien und Mustern erfolgen, um Voraussagen für unbekannte Eingangsdatensätze treffen zu können. Zum Beispiel können Verknüpfungen zwischen den mehreren Lerndatensätzen hergestellt werden zum Erzeugen von künstlichen Formdatensätzen und dazugehörigen künstlichen Sensitivitätslandschaften, welche die Formdatensätze und Sensitivitätslandschaften der Lerndatensätze erweitern.

Bei dem Beispiel der äußeren Motorradform erfolgt das Anwenden des Verfahrens zum maschinellen Lernen zum Erzeugen der Berechnungseinrichtung 9' mit Hilfe eines Neuronalen Netzes. Das Neuronale Netz der KI-Einrichtung 9' wird mit den in Schritt S3' erzeugten Lerndatensätzen angelernt, von welchen jeder einen die äußere Motorradform beschreibenden Satz an Ortsvektoren und die zugehörige Oberflächen-Sensitivitätskarte umfasst. Der jeweilige Lerndatensatz kann auch den zu dem jeweiligen Ortskoordinatensatz in Schritt S3' erfassten Strömungswiderstand umfassen. Durch das Anlernen kann die KI-Einrichtung 9' auch für einen unbekannten Ortskoordinatensatz, welcher einer unbekannten äußeren Fahrzeugform des Motorrads entspricht, als Eingangsdatensatz eine zugehörige Oberflächen-Sensitivitätskarte als Ausgangsdatensatz berechnen. Ein unbekannter Ortskoordinatensatz ist ein während des Anlernens nicht bereitgestellter Ortskoordinatensatz.

Das Neuronale Netz kann in den mehreren Lerndatensätzen Regelmäßigkeiten, Wiederholungen und/oder Ähnlichkeiten erkennen. Zum Beispiel kann in den mehreren Lerndatensätzen das Muster erkannt werden, dass bestimmte ähnliche äußere Formen einen kleinen Strömungswiderstand aufweisen. Des Weiteren kann in den mehreren Lerndatensätzen das Muster erkannt werden, dass bestimmte ähnliche äußere Formen einen großen Strömungswiderstand aufweisen.

Das Neuronale Netz kann Verknüpfungen zwischen den mehreren Lerndatensätzen herstellen und auf diese Weise künstliche Ortsdatensätze der äußeren Form des Motorrads und dazugehörige künstliche Oberflächen-Sensitivitätskarten erzeugen. Die künstlichen Ortsdatensätze und die dazugehörigen künstlichen Oberflächen-Sensitivitätskarten erweitern die Lerndatensätze.

Im fünften Schritt S5' des Verfahrens aus Fig. 2 wird für eine zu bestimmende körperliche Form eine Sensitivitätslandschaft mit Hilfe der Berechnungseinrichtung berechnet. Der Schritt S5' entspricht dem Schritt S5 des im Zusammenhang mit Fig. 1 beschriebenen Verfahrens.

Im sechsten Schritt S6' des Verfahrens aus Fig. 2 wird der Formdatensatz für die zu bestimmende körperliche Form in Abhängigkeit von der berechneten Sensitivitätslandschaft geändert. Die Änderung erfolgt derart, dass sich die vorgegebene Zieleigenschaft in Richtung zu einem vorbestimmten Wert ändert. Der Schritt S6' entspricht dem Schritt S6 des im Zusammenhang mit Fig. 1 beschriebenen Verfahrens.

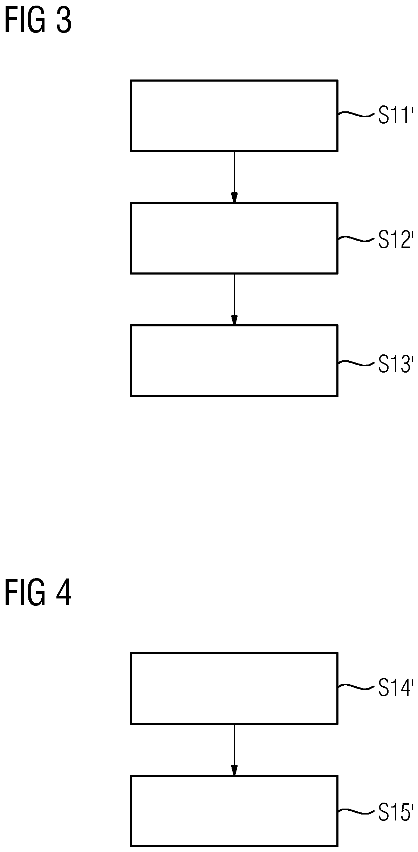

Fig. 3 zeigt eine erste Variante für das Erstellen des Formdatensatzes in Schritt S1 des Verfahrens aus Fig. 1 und in Schritt S1' des Verfahrens aus Fig. 2.

In dieser Variante umfasst der Schritt S1 bzw. der Schritt S1' des Erstellens des Formdatensatzes die folgenden Unterschritte. Im Schritt S11' wird ein körperliches Modell bereitgestellt. Das körperliche Modell ist ein gegenständliches körperliches Modell, wie beispielsweise ein Tonmodell. Das körperliche Modell ist beispielsweise das Motorrad-Modell 2' aus Fig. 8. Im Schritt S12' werden für dieses gegenständliche körperliche Modell Formdaten erfasst mit Hilfe einer Abtasteinrichtung. Beispielsweise wird mit Hilfe eines 3D-Scanners 3' die äußere Form des Motorrad-Modells 2' aus Fig. 8 erfasst. Im Schritt S13' wird für die erfassten Formdaten ein Formdatensatz erzeugt. Der Formdatensatz umfasst beispielsweise Ortsvektoren. Beispielsweise umfasst der Formdatensatz Ortsvektoren, welche die äußere Motorradform beschreiben.

Fig. 4 zeigt eine zweite Variante für das Erstellen des Formdatensatzes in Schritt S1 des Verfahrens aus Fig 1 und in Schritt S1' des Verfahrens aus Fig. 2.

In der zweiten Variante umfasst der Schritt S1 bzw. der Schritt S1' des Erstellens des Formdatensatzes die folgenden Unterschritte. Im Schritt S14' werden Formdaten für ein körperliches Modell bereitgestellt. Beispielsweise werden in Schritt S14' Formdaten für ein digitalisiertes körperliches Modell, z. B. ein CAD-Modell, bereitgestellt. Im Schritt S15' wird für die bereitgestellten Formdaten ein Formdatensatz erzeugt. Der Formdatensatz umfasst beispielsweise Ortsvektoren. Beispielsweise umfasst der Formdatensatz Ortsvektoren, welche die äußere Motorradform beschreiben.

Fig. 5 zeigt ein Ablaufdiagramm für eine Ausführungsform eines Verfahrens zur Herstellung einer Berechnungseinrichtung, welche eine Sensitivitätslandschaft aus einem Formdatensatz berechnet.

Im ersten Schritt S7 des Herstellungsverfahrens wird eine Basis-KI-Einrichtung bereitgestellt. Die Basis-KI-Einrichtung ist ein Maschinenlernalgorithmus entsprechend dem bei der Beschreibung von Schritt S4' aus Fig. 2 beschriebenen Maschinenlernalgorithmus.

Im zweiten Schritt S8 des Herstellungsverfahrens wird ein Lerndatensatz bereitgestellt. Das Bereitstellen des Lerndatensatzes in Schritt S8 entspricht dem bei der Beschreibung von Schritt S4' aus Fig. 2 beschriebenen Erzeugen eines Lerndatensatzes.

Im dritten Schritt S9 des Herstellungsverfahrens werden weiterer Lerndatensätze bereitgestellt. Das Bereitstellen weiterer Lerndatensätze in Schritt S9 entspricht dem bei der Beschreibung von Schritt S4' aus Fig. 2 beschriebenen Erzeugen von mehreren Lerndatensätzen.

Im vierten Schritt S10 des Herstellungsverfahrens wird ein Verfahren zum maschinellen Anlernen angewendet.

Das in Schritt S10 angewendete Verfahren zum maschinellen Anlernen der Basis-KI-Einrichtung zum Erzeugen einer angelernten KI-Einrichtung, entspricht dem in Bezug auf Schritt S4' aus Fig. 2 beschriebenen Verfahren zum maschinellen Anlernen zum Erzeugen einer Berechnungseinrichtung.

Alternativ kann eine Berechnungseinrichtung mit Hilfe von Konfigurationsdaten erzeugt werden, wobei die Konfigurationsdaten zuvor aus einer angelernten KI-Einrichtung ausgelesen werden. Eine Basis-KI-Einrichtung wird dann mit den Konfigurationsdaten konfiguriert, die arbeitet wie eine entsprechend angelernte KI-Einrichtung.

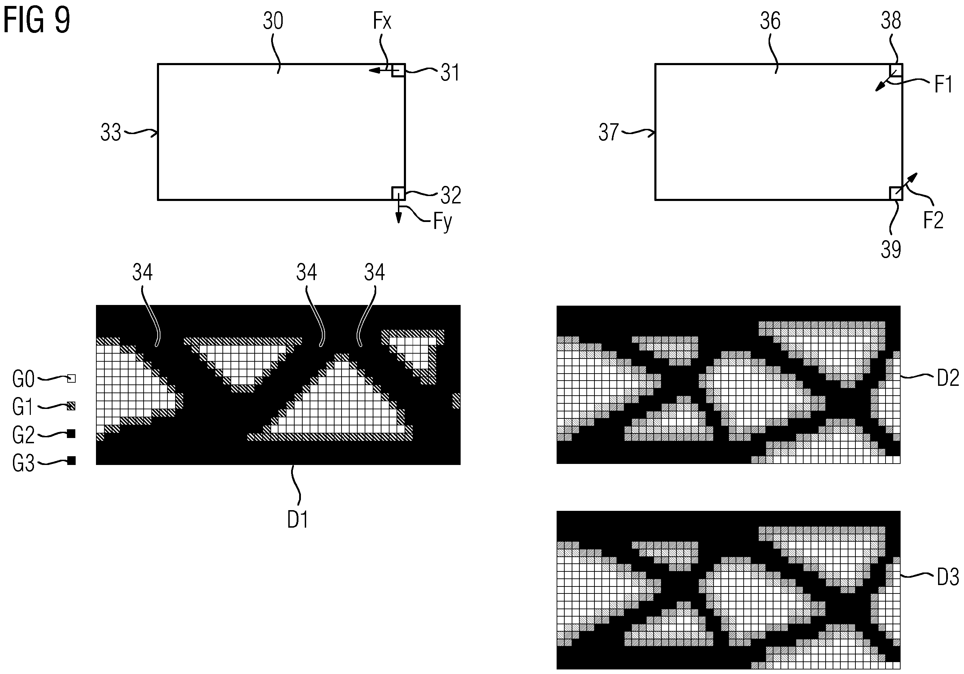

Fig. 9 zeigt ein weiteres Beispiel für eine Berechnung einer Sensitivitätslandschaft aus einem Formdatensatz mit Hilfe einer maschinell angelernten Berechnungseinrichtung.

In Fig. 9 wird eine verbesserte Bestimmung einer Form einer Platte 36, an der Kräfte F1, F2 (z. B. Zugkräfte, Gewichtskräfte) angreifen, mit Hilfe einer maschinell angelernten KI-Einrichtung veranschaulicht. Die Form der Platte 36 soll so verändert werden, dass sie ein minimales Gewicht hat bzw. minimalen Materialaufwand benötigt, um den vorgegebenen Kräften mechanisch Stand zu halten.

Die körperliche Form ist in diesem Beispiel die Platte 36. Die vorgegebene physikalische Zieleigenschaft ist in diesem Beispiel das Gewicht der Platte 36 bzw. der für die Platte 36 nötige Materialaufwand. Das Gewicht der Platte 36 bzw. der für die Platte 36 nötige Materialaufwand wird in Form der Dichte der Platte erfasst.

Wie im Folgenden beschrieben wird, wird zunächst ein Lerndatensatz für eine Platte 30 erzeugt und eine KI-Einrichtung mit Hilfe dieses Lerndatensatzes angelernt. Die auf diese Weise angelernte KI-Einrichtung wird dann angewendet, um die körperliche Form der Platte 36 mit Hilfe der KI-Einrichtung zu bestimmen.

Zunächst wird also der Lerndatensatz für die Platte 30 erzeugt. Die Randbedingungen im Falle der Platte 30 sind, dass die Platte 30 an ihrer linken Seite 33, z. b. an einer Wand, befestigt ist, und dass Kräfte Fx und Fy an der Platte angreifen, wie auf der linken Seite von Fig. 9 gezeigt. An der rechten oberen Ecke 31 der Platte 30 greift die Kraft Fx an, welche nach links gerichtet ist. Des Weiteren greift an der rechten unteren Ecke 32 der Platte 30 eine Kraft Fy an, welche nach unten gerichtet ist.

Die körperliche Form der Platte 30 soll derart verbessert werden, dass die optimale körperliche Form gefunden wird, welche den angreifenden Kräften Fx, Fy mechanisch Stand halten kann bei minimalem Gewicht bzw. minimalem Materialaufwand für die Platte 30.

Zur Erzeugung des Lerndatensatzes wird in einer Strukturmechanik-Simulation die Strukturfestigkeit der Platte 30 für die gegebenen Randbedingungen bestimmt. Das Ergebnis der Simulation für die Dichteverteilung D1 der Platte 30 ist in Fig. 9 links unten zu sehen. In der Darstellung der Fig. 9 ist die Dichteverteilung D1 vereinfacht in grober Auflösung durch vier unterschiedlich dichte Bereiche dargestellt. Die vier unterschiedlich dichten Bereiche sind durch unterschiedlich schraffierte bzw. markierte Quadrate (Pixel) G0, G1, G2, G3 dargestellt. Schwarze Pixel G3 stellen eine hohe Materialdichte dar, eng schraffierte Pixel G2 stellen eine mittlere Materialdichte dar, weit schraffierte Pixel G1 stellen eine niedrige Materialdichte dar und weiße Pixel G0 stellen eine Materialdichte von null, d. h. kein Material, dar. Wie in Fig. 9 bei der Dichteverteilung D1 zu sehen, kann die Platte 30 den angreifenden Kräften Fx, Fy immer noch mechanisch Stand halten, auch wenn Material im Inneren der Platte 30 entfernt wird, solange einzelne Materialstreben 34 der Platte 30 vorhanden bleiben.

Die genannten Randbedingungen und die für die Randbedingungen bestimmte optimale Form der Platte 30 bilden einen Lerndatensatz mit Hilfe dem die KI-Einrichtung angelernt wird.

Mit der auf diese Weise angelernten KI-Einrichtung wird im nächsten Schritt für einen unbekannten Eingangsdatensatz eine optimale Form einer Platte 36 bestimmt. Dies ist auf der rechten Seite von Fig. 9 veranschaulicht.

Wie auf der rechten Seite von Fig. 9 gezeigt, greift an der Platte 36, die an ihrer linken Seite 37 befestigt ist, an der rechten oberen Ecke 38 eine Kraft F1 an, welche nach links unten gerichtet ist. Des Weiteren greift an der rechten unteren Ecke 39 der Platte 36 eine Kraft F2 an, welche nach rechts oben gerichtet ist.

Die Form der Platte 36 soll wieder derart verbessert werden, dass die optimale körperliche Form gefunden wird, welche den angreifenden Kräften F1 und F2 mechanisch Stand halten kann bei minimalem Gewicht bzw. minimalem Materialaufwand für die Platte 36.

Mit Hilfe der, wie in Bezug auf die Platte 30 beschrieben, angelernten KI-Einrichtung wird eine verbesserte Form der Platte 36 für diese Randbedingungen bestimmt. Die Vorhersage der angelernten KI-Einrichtung für die Dichteverteilung D3 der Platte 36 ist in Fig. 9 rechts unten zu sehen. Die Dichte D3 des Materials der Platte 36 ist, wie oben bei der Dichteverteilung D1 beschrieben, mittels unterschiedlich schraffierter bzw. markierter Pixel dargestellt.

Zum Vergleich hat die Anmelderin strukturmechanische Simulationen durchgeführt. In Fig. 9 ist rechts in der Mitte das Ergebnis einer Strukturmechanik-Simulation für die Dichteverteilung D2 der Platte 36 für die gegebenen Randbedingungen zu sehen. Ein Vergleich von der durch die KI-Einrichtung vorhergesagten optimalen Form (Dichteverteilung D3) und der von der Strukturmechanik-Simulation berechneten optimalen Form (Dichteverteilung D2) für die Platte 36 zeigt, dass die Vorhersage der KI-Einrichtung dem Ergebnis der Strukturmechanik-Simulation sehr ähnlich ist. Das heißt, dass durch die angelernte KI-Einrichtung die Form der Platte 36 sehr gut im Vergleich zu einer Simulationsrechnung und mit viel geringerem Rechenaufwand als bei der Simulationsrechnung bestimmt werden kann.

Obwohl die vorliegende Erfindung anhand von Ausführungsbeispielen beschrieben wurde, ist sie vielfältig modifizierbar. Zum Beispiel kann die körperliche Form eine Kühlstruktur bzw. ein Kühlkörper sein und die Zieleigenschaft eine Kühlungseigenschaft. Beispielsweise kann mit Hilfe des vorgeschlagenen Verfahrens, der Kühlkörper so verändert werden, dass seine Wärmeableitungsfähigkeit maximiert wird.

## Patentansprüche

1. Computerimplementiertes Verfahren zum Bestimmen einer körperlichen Form mit einer vorgegebenen physikalischen Zieleigenschaft, wobei das Verfahren umfasst:
Bereitstellen eines körperlichen Modells und Erfassen von Formdaten für das körperliche Modell und/oder Bereitstellen von Formdaten eines körperlichen Modells jeweils zum Erstellen eines Formdatensatzes, welcher Orte an oder auf einer körperlichen Form, welche den Formdaten entspricht, identifiziert (S1, S1');
Erfassen der Zieleigenschaft für die körperliche Form, welche dem Formdatensatz entspricht (S2, S2');
Bestimmen von Sensitivitätswerten für mehrere Orte an oder auf der körperlichen Form in Abhängigkeit von dem Formdatensatz zum Erzeugen einer Sensitivitätslandschaft für den jeweiligen Formdatensatz (S3'), wobei ein Sensitivitätswert für einen Ort an oder auf der körperlichen Form ein Änderungsmaß für die Veränderung der Zieleigenschaft der körperlichen Form bei einer Änderung der körperlichen Form im Bereich des Ortes durch eine Änderung des Formdatensatzes angibt;
Anwenden eines Verfahrens zum maschinellen Lernen zum Erzeugen einer Berechnungseinrichtung, welche einem jeweiligen Formdatensatz eine Sensitivitätslandschaft zuordnet (S4'), wobei das maschinelle Lernen in Abhängigkeit von mehreren Formdatensätzen und den dazu erfassten Sensitivitätswerten erfolgt;
Berechnen einer Sensitivitätslandschaft in Abhängigkeit von einem Formdatensatz für eine zu bestimmende körperliche Form mit Hilfe der Berechnungseinrichtung (S5, S5');
Ändern des Formdatensatzes für die zu bestimmende körperliche Form in Abhängigkeit von der berechneten Sensitivitätslandschaft derart, dass sich die vorgegebene physikalische Zieleigenschaft in Richtung zu einem vorbestimmten Wert ändert (S6, S6'); und wobei
die Berechnungseinrichtung (7, 9, 9')
eine Mustererkennung an Formdatensätzen durchführt und eine Sensitivitätslandschaft ausgibt.

2. Verfahren nach Anspruch 1, **dadurch gekennzeichnet, dass** die körperliche Form ein Volumen, eine zweidimensionale geometrische Form, eine dreidimensionale geometrische Form, eine Fahrzeugform, eine Form eines Strukturelements, eine Form eines Befestigungselements und/oder eine dreidimensionale Form einer Oberflächenstruktur ist.

3. Verfahren nach einem der Ansprüche 1 - 2, **dadurch gekennzeichnet, dass** das Erfassen der Formdaten (S1, S1') für das körperliche Modell aufweist: ein Abtasten mit Hilfe einer Abtasteinrichtung, insbesondere mit Hilfe von Kameras, Laserstrahlen, Radarwellen, und/oder Ultraschallwellen.

4. Verfahren nach einem der Ansprüche 1 - 3, **dadurch gekennzeichnet, dass** die Formdaten aufweisen: rechnerunterstütztkonstruierte Daten (CAD-Daten), Oberflächenformdaten, Regelformdaten, Regelflächendaten, Gitterdaten, Gitterstrukturdaten, Daten parametrisierter Freiformflächen und/oder Facettendaten.

5. Verfahren nach einem der Ansprüche 1 - 4, **dadurch gekennzeichnet, dass** das Erfassen der Zieleigenschaft (S2, S2') aufweist: ein Messen der Zieleigenschaft, insbesondere ein Messen eines Strömungswiderstands in einem Windkanal, ein Messen einer Strukturfestigkeit, einer Temperatur, einer Reflexionseigenschaft an der Oberfläche, eines Gewichts, einer Leitfähigkeit und/oder einer Schallabsorption einer Oberflächenstruktur.

6. Verfahren nach einem der Ansprüche 1 - 5, **dadurch gekennzeichnet, dass** das Erfassen der Zieleigenschaft (S2, S2') ein Simulationsverfahren zur Simulation der Zieleigenschaft in Abhängigkeit von dem Formdatensatz aufweist.

7. Verfahren nach einem der Ansprüche 1 - 6, **dadurch gekennzeichnet, dass** das Erfassen der Zieleigenschaft (S2, S2') unter Berücksichtigung von erfassten Randbedingungen erfolgt, wobei die Randbedingungen Wertebereiche festlegen, für welche das Messen und/oder das Simulieren der Zieleigenschaft erfolgt, und wobei die Randbedingungen insbesondere eine Windrichtung, eine Windstärke, eine Windkanalkonfiguration, ein Gewicht, eine Strukturfestigkeit, eine Schallfrequenz und/oder eine Schallleistung aufweisen.

8. Verfahren nach Anspruch 6 oder 7, **dadurch gekennzeichnet, dass** das Simulationsverfahren aufweist: ein mathematisches Simulationsverfahren, ein numerisches Simulationsverfahren, ein Raumdiskretisierungsverfahren, ein Oberflächendiskretisierungsverfahren, ein Finite-Elemente-Verfahren, ein Finite-Differenzen-Verfahren, ein Finite-Volumen-Verfahren, ein Partikel-basiertes Verfahren, ein numerisches Kontinuumsmechanik-Verfahren und/oder ein numerisches Strömungsmechanik-Verfahren.

9. Verfahren nach einem der Ansprüche 1 - 8, **dadurch gekennzeichnet, dass** jedem Formdatensatz die dazu erfassten Sensitivitätswerte zum Erzeugen von einem jeweiligen Lerndatensatz zugeordnetwerden.

10. Verfahren nach Anspruch 9, ferner umfassend Erzeugen und Speichern mehrerer Lerndatensätze.

11. Verfahren nach einem der Ansprüche 1 - 10, **dadurch gekennzeichnet, dass** der jeweilige Formdatensatz die mehreren Orte auf oder an der Oberfläche der körperlichen Form in der Art von Ortsdatensätzen umfasst und dass ein Sensitivitätswert für einen einen vorbestimmten Ort definierenden Ortsdatensatz ein Änderungsmaß für die Veränderung der Zieleigenschaft bei einer Änderung der körperlichen Form in einer Normalrichtung an dem vorbestimmten Ort angibt.

12. Verfahren nach einem der Ansprüche 1 - 11, **dadurch gekennzeichnet, dass** die jeweilige Sensitivitätslandschaft einen Formdatensatz und ein Änderungsmaß für die Veränderung der Zieleigenschaft der körperlichen Form bei einer Änderung der körperlichen Form in einer jeweiligen Normalrichtung an mehreren der durch den Formdatensatz identifizierten Orte an oder auf der körperlichen Form durch eine Änderung des Formdatensatzes umfasst.

13. Verfahren nach einem der Ansprüche 9 - 12 **dadurch gekennzeichnet, dass** das Anwenden eines Verfahrens zum maschinellen Lernen (S4') ein Anlernen/Trainieren eines Neuronales Netzes, insbesondere eines faltenden Neuronalen Netzes, mit Hilfe mehrerer erzeugter Lerndatensätze aufweist.

14. Verfahren nach einem der Ansprüche 1 - 13, **dadurch gekennzeichnet, dass** die folgenden Schritte nacheinander mehrfach ausgeführt werden:
Ändern des Formdatensatzes für die zu bestimmende körperliche Form (S6, S6'), und
Berechnen einer Sensitivitätslandschaft in Abhängigkeit von dem Formdatensatz mit Hilfe der Berechnungseinrichtung zum Ändern der körperlichen Form (S5, S5').

15. Verfahren nach einem der Ansprüche 1 - 14, **dadurch gekennzeichnet, dass** die Berechnungseinrichtung (7, 9, 9') eine Zuordnungstabelle umfasst, welche mehreren Formdatensätzen eine jeweilige Sensitivitätslandschaft zuordnet.

16. Verfahren nach einem der Ansprüche 1 - 15, ferner umfassend Anzeigen der Sensitivitätslandschaft in Abhängigkeit von dem Formdatensatz.

17. Verfahren nach Anspruch 16, **dadurch gekennzeichnet, dass** das Anzeigen aufweist: ein räumliches Anzeigen der Sensitivitätslandschaft in Abhängigkeit von dem Formdatensatz an dem körperlichen Modell und/oder ein Anzeigen der Sensitivitätslandschaft in Abhängigkeit von dem Formdatensatz derart, dass die Sensitivitätslandschaft zusammen mit dem Formdatensatz angezeigt wird.

18. Verfahren nach einem der Ansprüche 1 - 17, umfassend Fertigen einer körperlichen Form mit der vorgegebenen physikalischen Zieleigenschaft gemäß dem in Abhängigkeit von der berechneten Sensitivitätslandschaft geänderten Formdatensatz.

19. Verfahren nach Anspruch 18, **dadurch gekennzeichnet, dass** das Fertigen einer körperlichen Form ein additives Herstellungsverfahren, insbesondere ein Herstellungsverfahren mit Hilfe eines Strangs rasch abbindender Masse, umfasst.

20. Verfahren nach einem der vorhergehenden Ansprüche, **dadurch gekennzeichnet, dass** die physikalische Zieleigenschaft ein Strömungswiderstand, eine Festigkeit, eine Temperatur, eine Reflexionseigenschaft an der Oberfläche, ein Gewicht, eine Leitfähigkeit und/oder eine Schallabsorption einer Oberflächenstruktur ist.

21. Verfahren nach einem der vorhergehenden Ansprüche, **dadurch gekennzeichnet, dass** der jeweilige Formdatensatz die mehreren Orte auf oder an der Oberfläche der körperlichen Form in der Art von Ortsdatensätzen umfasst.

22. Verfahren nach einem der vorhergehenden Ansprüche, **dadurch gekennzeichnet, dass** die Berechnungseinrichtung (7, 9, 9') ein Neuronales Netz, insbesondere ein faltendes Neuronales Netz, umfasst.

23. Verfahren nach einem der vorhergehenden Ansprüche, **dadurch gekennzeichnet, dass** die Berechnungseinrichtung (7, 9, 9') eingerichtet ist, eine Mustererkennung an Formdatensätzen durchzuführen und Sensitivitätswerte auszugeben.

24. Vorrichtung zur Bestimmung einer körperlichen Form mit einer vorgegebenen physikalischen Zieleigenschaft, aufweisend:
eine Erfassungseinrichtung (6, 10, 10') zur Erzeugung eines Formdatensatzes für eine körperliche Form, welcher Orte an oder auf der körperlichen Form identifiziert;
eine Berechnungseinrichtung (7, 9, 9') zur Berechnung einer Sensitivitätslandschaft aus dem Formdatensatz, wobei:
die Sensitivitätslandschaft den Formdatensatz und ein Änderungsmaß für die Veränderung der Zieleigenschaft der körperlichen Form bei einer Änderung der körperlichen Form in einer jeweiligen Normalrichtung an mehreren der durch den Formdatensatz identifizierten Orte an oder auf der körperlichen Form umfasst;
die Berechnungseinrichtung (7, 9, 9') eine auf Basis maschinellen Lernens angelernte Künstliche-Intelligenz-Vorrichtung ist, welche einen Formdatensatz als Eingangsdatensatz auf eine Sensitivitätslandschaft als Ausgangsdatensatz abbildet, wobei eine Mustererkennung an Formdatensätzen durchgeführt wird,
das maschinelle Lernen in Abhängigkeit von mehreren Lerndatensätzen erfolgt,
jeder Lerndatensatz einen Lern-Formdatensatz für eine Lern-körperliche-Form und eine Lern-Sensitivitätslandschaft als Änderungsmaß für die Veränderung der Zieleigenschaft der Lern-körperlichen-Form bei einer Änderung der Lern-körperlichen-Form in einer jeweiligen Normalrichtung an mehreren der durch den Lern-Formdatensatz identifizierten Orte an oder auf der Lern-körperlichen-Form umfasst; sowie
eine Anzeigeeinrichtung (5, 5') zur Anzeige der Sensitivitätslandschaft in Abhängigkeit von dem Formdatensatz; und
wobei die Vorrichtung dazu eingerichtet ist, den Formdatensatz für die zu bestimmende körperliche Form in Abhängigkeit von der berechneten Sensitivitätslandschaft derart zu ändern, dass sich die vorgegebene physikalische Zieleigenschaft in Richtung zu einem vorbestimmten Wert ändert (S6, S6').

25. Vorrichtung nach Anspruch 24, ferner mit einer Speichereinrichtung (12) zum Speichern der berechneten Sensitivitätslandschaft in Abhängigkeit von dem Formdatensatz.

26. Vorrichtung nach Anspruch 24 oder 25, ferner mit einer Fertigungsvorrichtung zur Fertigung einer körperlichen Form mit der vorgegebenen Zieleigenschaft, insbesondere einer Fertigungsvorrichtung zur additiven Herstellung mit Hilfe eines Strangs rasch abbindender Masse.

## Claims

1. Computer-implemented method for determining a physical shape having a predefined physical target property, wherein the method comprises:
providing a physical model and capturing shape data for the physical model and/or providing shape data of a physical model for the purpose of respectively creating a shape data record which identifies locations at or on a physical shape which corresponds to the shape data (S1, S1');
capturing the target property for the physical shape which corresponds to the shape data record (S2, S2');
determining sensitivity values for a plurality of locations at or on the physical shape on the basis of the shape data record for the purpose of generating a sensitivity landscape for the respective shape data record (S3'), wherein a sensitivity value for a location at or on the physical shape indicates a degree of change for the change in the target property of the physical shape if the physical shape changes in the region of the location as a result of a change in the shape data record;
using a machine learning method to produce a calculation device which assigns a sensitivity landscape to a respective shape data record (S4'), wherein the machine learning is carried out on the basis of a plurality of shape data records and the sensitivity values captured for this purpose;
calculating a sensitivity landscape on the basis of a shape data record for a physical shape to be determined with the aid of the calculation device (S5, S5'); and
changing the shape data record for the physical shape to be determined on the basis of the calculated sensitivity landscape in such a manner that the predefined physical target property changes in the direction of a predetermined value (S6, S6'); and wherein
the calculation device (7, 9, 9') carries out pattern recognition on shape data records and outputs a sensitivity landscape.

2. Method according to Claim 1, **characterized in that** the physical shape is a volume, a two-dimensional geometrical shape, a three-dimensional geometrical shape, a vehicle shape, a shape of a structural element, a shape of a fastening element and/or a three-dimensional shape of a surface structure.

3. Method according to one of Claims 1-2, **characterized in that** the process of capturing the shape data (S1, S1') for the physical model comprises: scanning with the aid of a scanning device, in particular with the aid of cameras, laser beams, radar waves and/or ultrasonic waves.

4. Method according to one of Claims 1-3, **characterized in that** the shape data have:
computer-aided-design data (CAD data), surface shape data, standard shape data, ruled surface data, grid data, grid structure data, data relating to parameterized free-form surfaces and/or facet data.

5. Method according to one of Claims 1-4, **characterized in that** the process of capturing the target property (S2, S2') comprises: measuring the target property, in particular measuring a flow resistance in a wind tunnel, measuring a structural strength, a temperature, a reflection property at the surface, a weight, a conductivity and/or sound absorption of a surface structure.

6. Method according to one of Claims 1-5, **characterized in that** the process of capturing the target property (S2, S2') comprises a simulation method for simulating the target property on the basis of the shape data record.

7. Method according to one of Claims 1-6, **characterized in that** the process of capturing the target property (S2, S2') is carried out taking into account captured boundary conditions, wherein the boundary conditions stipulate ranges of values for which the target property is measured and/or simulated, and wherein the boundary conditions comprise, in particular, a wind direction, a wind strength, a wind tunnel configuration, a weight, a structural strength, a sound frequency and/or a sound power.

8. Method according to Claim 6 or 7, **characterized in that** the simulation method comprises: a mathematical simulation method, a numerical simulation method, a space discretization method, a surface discretization method, a finite elements method, a finite differences method, a finite volumes method, a particle-based method, a numerical continuum mechanics method and/or a numerical fluid mechanics method.

9. Method according to one of Claims 1-8, **characterized in that** each shape data record is assigned the sensitivity values captured for this purpose in order to generate a respective learning data record.

10. Method according to Claim 9, also comprising generating and storing a plurality of learning data records.

11. Method according to one of Claims 1-10, **characterized in that** the respective shape data record comprises the plurality of locations on or at the surface of the physical shape in the form of location data records, and **in that** a sensitivity value for a location data record defining a predetermined location indicates a degree of change for the change in the target property if the physical shape changes in a normal direction at the predetermined location.

12. Method according to one of Claims 1-11, **characterized in that** the respective sensitivity landscape comprises a shape data record and a degree of change for the change in the target property of the physical shape if the physical shape changes in a respective normal direction at a plurality of the locations at or on the physical shape, which are identified by the shape data record, as a result of a change in the shape data record.

13. Method according to one of Claims 9-12, **characterized in that** the process of using a machine learning method (S4') comprises teaching/training a neural network, in particular a convolutional neural network, with the aid of a plurality of learning data records which have been generated.

14. Method according to one of Claims 1-13, **characterized in that** the following steps are repeatedly carried out in succession:
changing the shape data record for the physical shape to be determined (S6, S6'), and
calculating a sensitivity landscape on the basis of the shape data record with the aid of the calculation device for the purpose of changing the physical shape (S5, S5').

15. Method according to one of Claims 1-14, **characterized in that** the calculation device (7, 9, 9') comprises an assignment table which assigns a respective sensitivity landscape to a plurality of shape data records.

16. Method according to one of Claims 1-15, also comprising displaying the sensitivity landscape on the basis of the shape data record.

17. Method according to Claim 16, **characterized in that** the display process comprises: spatially displaying the sensitivity landscape on the basis of the shape data record on the physical model and/or displaying the sensitivity landscape on the basis of the shape data record in such a manner that the sensitivity landscape is displayed together with the shape data record.

18. Method according to one of Claims 1-17, comprising producing a physical shape having the predefined physical target property according to the shape data record which has been changed on the basis of the calculated sensitivity landscape.

19. Method according to Claim 18, **characterized in that** the process of producing a physical shape comprises an additive manufacturing method, in particular a manufacturing method with the aid of a strand of quick-setting compound.

20. Method according to one of the preceding claims, **characterized in that** the physical target property is a flow resistance, a strength, a temperature, a reflection property at the surface, a weight, a conductivity and/or sound absorption of a surface structure.

21. Method according to one of the preceding claims, **characterized in that** the respective shape data record comprises the plurality of locations on or at the surface of the physical shape in the form of location data records.

22. Method according to one of the preceding claims, **characterized in that** the calculation device (7, 9, 9') comprises a neural network, in particular a convolutional neural network.

23. Method according to one of the preceding claims, **characterized in that** the calculation device (7, 9, 9') is set up to carry out pattern recognition on shape data records and to output sensitivity values.

24. Apparatus for determining a physical shape having a predefined physical target property, having:
a capture device (6, 10, 10') for generating a shape data record for a physical shape, which data record identifies locations at or on the physical shape;
a calculation device (7, 9, 9') for calculating a sensitivity landscape from the shape data record, wherein:
the sensitivity landscape comprises the shape data record and a degree of change for the change in the target property of the physical shape if the physical shape changes in a respective normal direction at a plurality of the locations at or on the physical shape which are identified by the shape data record;
the calculation device (7, 9, 9') is an artificial intelligence apparatus which is taught on the basis of machine learning and maps a shape data record as an input data record to a sensitivity landscape as an output data record, wherein pattern recognition is carried out on shape data records,
the machine learning is carried out on the basis of a plurality of learning data records,
each learning data record comprises a learning shape data record for a learning physical shape and a learning sensitivity landscape as a degree of change for the change in the target property of the learning physical shape if the learning physical shape changes in a respective normal direction at a plurality of the locations at or on the learning physical shape which are identified by the learning shape data record; and
a display device (5, 5') for displaying the sensitivity landscape on the basis of the shape data record; and
wherein the apparatus is set up to change the shape data record for the physical shape to be determined on the basis of the calculated sensitivity landscape in such a manner that the predefined physical target property changes in the direction of a predetermined value (S6, S6').

25. Apparatus according to Claim 24, also having a storage device (12) for storing the calculated sensitivity landscape on the basis of the shape data record.

26. Apparatus according to Claim 24 or 25, also having a production apparatus for producing a physical shape having the predefined target property, in particular a production apparatus for additive manufacturing with the aid of a strand of quick-setting compound.

## Revendications

1. Procédé implémenté par ordinateur pour la détermination d'une forme physique ayant une propriété physique cible prédéfinie, dans lequel le procédé comprend :
la fourniture d'un modèle physique et la détection de données de forme pour le modèle physique et/ou la fourniture de données de forme d'un modèle physique respectivement pour établir un jeu de données de forme, qui identifie des endroits contre ou sur une forme physique qui correspond aux données de forme (S1, S1') ;
la détection de la propriété cible pour la forme physique qui correspond au jeu de données de forme (S2, S2') ;
la détermination de valeurs de sensibilité pour plusieurs endroits contre ou sur la forme physique en fonction du jeu de données de forme pour produire un paysage de sensibilité pour le jeu de données de forme respectif (S3'), dans lequel une valeur de sensibilité pour un endroit contre ou sur la forme physique indique une mesure de changement pour la modification de la propriété cible de la forme physique lors d'un changement de la forme physique au niveau de l'endroit par un changement du jeu de données de forme ;
l'application d'un procédé pour l'apprentissage machine pour produire un dispositif de calcul, lequel attribue (S4') un paysage de sensibilité à un jeu de données de forme respectif, dans lequel l'apprentissage machine s'effectue en fonction de plusieurs jeux de données de forme et des valeurs de sensibilité détectées à cet effet ;
le calcul d'un paysage de sensibilité en fonction d'un jeu de données de forme pour une forme physique à déterminer à l'aide du dispositif de calcul (S5, S5') ;
la modification du jeu de données de forme pour la forme physique à déterminer en fonction du paysage de sensibilité calculé, de telle façon que la propriété physique cible prédéfinie change en direction d'une valeur prédéterminée (S6, S6') ; et dans lequel
le dispositif de calcul (7, 9, 9') exécute une reconnaissance de modèle sur des jeux de données de forme et fournit un paysage de sensibilité.

2. Procédé selon la revendication 1, **caractérisé en ce que** la forme physique est un volume, une forme géométrique bi-dimensionnelle, une forme géométrique tri-dimensionnelle, une forme de véhicule, une forme d'un élément structurel, une forme d'un élément de fixation et/ou une forme tri-dimensionnelle d'une structure de surface.

3. Procédé selon l'une des revendications 1 - 2, **caractérisé en ce que** la détection des données de forme (S1, S1') pour le modèle physique présente : un balayage à l'aide d'un dispositif de balayage, en particulier à l'aide de caméras, de rayons laser, d'ondes radar et/ou d'ondes ultrasoniques.

4. Procédé selon l'une des revendications 1 - 3, **caractérisé en ce que** les données de forme présentent : des données (données de CAO) créées en étant assistées par ordinateur, des données de forme de surface, des données de forme réglée, des données de surface réglée, des données maillées, des données de structure maillée, des données de surfaces de forme libre paramétrisées et/ou des données de facette.

5. Procédé selon l'une des revendications 1 - 4, **caractérisé en ce que** la détection de la propriété cible (S2, S2') présente : une mesure de la propriété cible, en particulier une mesure d'une résistance à l'écoulement dans une soufflerie, une mesure d'une rigidité de structure, une température, une propriété de réfléchissement sur la surface, un poids, une conductivité et/ou une absorption sonore d'une structure de surface.

6. Procédé selon l'une des revendications 1 - 5, **caractérisé en ce que** la détection de la propriété cible (S2, S2') présente un procédé de simulation pour la simulation de la propriété cible en fonction du jeu de données de forme.

7. Procédé selon l'une des revendications 1 - 6, **caractérisé en ce que** la détection de la propriété cible (S2, S2') est effectuée en tenant compte de conditions aux limites détectées, dans lequel les conditions aux limites définissent des plages de valeurs pour lesquelles est effectuée la mesure et/ou la simulation de la propriété cible, et dans lequel les conditions aux limites présentent en particulier un sens du vent, une force du vent, une configuration de la soufflerie, un poids, une rigidité de structure, une fréquence sonore et/ou une puissance sonore.

8. Procédé selon la revendication 6 ou 7, **caractérisé en ce que** le procédé de simulation présente : un procédé de simulation mathématique, un procédé de simulation numérique, un procédé de discrétisation spatiale, un procédé de discrétisation de surface, un procédé d'éléments finis, un procédé des différences finies, un procédé de volumes finis, un procédé basé sur les particules, un procédé numérique de mécanique de continuum et/ou un procédé numérique de mécanique des fluides.

9. Procédé selon l'une des revendications 1 - 8, **caractérisé en ce qu'**à chaque jeu de données de forme sont attribuées les valeurs de sensibilité détectées à cet effet pour produire un jeu de données d'apprentissage respectif.

10. Procédé selon la revendication 9, comprenant en outre la production et la mise en mémoire de plusieurs jeux de données d'apprentissage.

11. Procédé selon l'une des revendications 1 - 10, **caractérisé en ce que** le jeu de données de forme respectif comprend la pluralité d'endroits sur ou contre la surface de la forme physique à la manière de jeux de données d'endroits et qu'une valeur de sensibilité pour un jeu de données d'endroits définissant un endroit prédéterminé indique une mesure de changement pour la modification de la propriété cible lors d'un changement de la forme physique dans un sens de normale à l'endroit prédéterminé.

12. Procédé selon l'une des revendications 1 - 11, **caractérisé en ce que** le paysage de sensibilité respectif comprend un jeu de données de forme et une mesure de changement pour la modification de la propriété cible de la forme physique lors d'un changement de la forme physique dans un sens de normale respectif à plusieurs endroits identifiés par le jeu de données de forme contre ou sur la forme physique par un changement du jeu de données de forme.

13. Procédé selon l'une des revendications 9 - 12, **caractérisé en ce que** l'application d'un procédé pour l'apprentissage machine (S4') présente un apprentissage/entraînement d'un réseau neuronal, en particulier d'un réseau neuronal à convolution, à l'aide de plusieurs jeux de données d'apprentissage produits.

14. Procédé selon l'une des revendications 1 - 13, **caractérisé en ce que** les étapes suivantes sont exécutées plusieurs fois les unes après les autres :
changement du jeu de données de forme pour la forme physique à déterminer (S6, S6'), et
calcul d'un paysage de sensibilité en fonction du jeu de données de forme à l'aide du dispositif de calcul pour changer la forme physique (S5, S5').

15. Procédé selon l'une des revendications 1 - 14, **caractérisé en ce que** le dispositif de calcul (7, 9, 9') comprend un tableau d'attribution qui attribue un paysage de sensibilité respectif à plusieurs jeux de données de forme.

16. Procédé selon l'une des revendications 1 - 15, comprenant en outre d'afficher le paysage de sensibilité en fonction du jeu de données de formes.

17. Procédé selon la revendication 16, **caractérisé en ce que** l'affichage présente : un affichage physique du paysage de sensibilité en fonction du jeu de données de forme sur le modèle physique et/ou un affichage du paysage de sensibilité en fonction du jeu de données de forme de telle façon que le paysage de sensibilité soit affiché conjointement avec le jeu de données de forme.

18. Procédé selon l'une des revendications 1 - 17, comprenant la réalisation d'une forme physique ayant la propriété physique cible prédéfinie selon le jeu de données de forme modifié en fonction du paysage de sensibilité calculé.

19. Procédé selon la revendication 18, **caractérisé en ce que** la réalisation d'une forme physique comprend un procédé de fabrication additive, en particulier un procédé de fabrication à l'aide d'une barre continue de masse liante.

20. Procédé selon l'une des revendications précédentes, **caractérisé en ce que** la propriété physique cible est une résistance à l'écoulement, une rigidité, une température, une propriété de réfléchissement sur la surface, un poids, une conductivité et/ou une absorption sonore d'une structure de surface.

21. Procédé selon l'une des revendications précédentes, **caractérisé en ce que** le jeu de données de forme respectif comprend la pluralité d'endroits sur ou contre la surface de la forme physique à la manière de jeux de données d'endroits.

22. Procédé selon l'une des revendications précédentes, **caractérisé en ce que** le dispositif de calcul (7, 9, 9') comprend un réseau neuronal, en particulier un réseau neuronal à convolution.

23. Procédé selon l'une des revendications précédentes, **caractérisé en ce que** le dispositif de calcul (7, 9, 9') est conçu pour exécuter une reconnaissance de modèle sur des jeux de données de forme et fournir des valeurs de sensibilité.

24. Dispositif pour la détermination d'une forme physique ayant une propriété physique cible prédéfinie, présentant :
un dispositif de détection (6, 10, 10') pour produire un jeu de données de forme pour une forme physique qui identifie des endroits contre ou sur la forme physique ;
un dispositif de calcul (7, 9, 9') pour calculer un paysage de sensibilité à partir du jeu de données de forme, dans lequel :
le paysage de sensibilité comprend le jeu de données de forme et une mesure de changement pour la modification de la propriété cible de la forme physique lors d'un changement de la forme physique dans un sens de normale respectif à une pluralité d'endroits identifiés par le jeu de données de forme contre ou sur la forme physique ;
le dispositif de calcul (7, 9, 9') est un dispositif d'intelligence artificielle formé sur la base de l'apprentissage machine, qui représente un jeu de données de forme en tant que jeu de données d'entrée sur un paysage de sensibilité en tant que jeu de données de sortie, dans lequel une détection de modèle est exécutée sur des jeux de données de forme,
l'apprentissage machine est effectué en fonction de plusieurs jeux de données d'apprentissage,
chaque jeu de données d'apprentissage comprend un jeu de données de forme d'apprentissage pour une forme physique d'apprentissage et un paysage de sensibilité d'apprentissage en tant que mesure de changement pour la modification de la propriété cible de la forme physique d'apprentissage lors d'un changement de la forme physique d'apprentissage dans un sens de normale respectif à plusieurs des endroits identifiés par le jeu de données de forme d'apprentissage contre ou sur la forme physique d'apprentissage ; ainsi
qu'un dispositif d'affichage (5, 5') pour afficher le paysage de sensibilité en fonction du jeu de données de forme ; et
dans lequel le dispositif est conçu pour changer le jeu de données de forme pour la forme physique à déterminer en fonction du paysage de sensibilité calculé de telle façon que la propriété physique cible prédéfinie change en direction d'une valeur prédéterminée (S6, S6') .

25. Dispositif selon la revendication 24, présentant en outre un dispositif de mise en mémoire (12) pour mettre en mémoire le paysage de sensibilité calculé en fonction du jeu de données de forme.

26. Dispositif selon la revendication 24 ou 25, présentant en outre un dispositif de fabrication pour fabriquer une forme physique ayant la propriété cible prédéfinie, en particulier un dispositif de fabrication pour la fabrication additive à l'aide d'une barre continue de masse liante.
